(19) Europäisches Patentamt
European Patent Office
Office européen des brevets

(11) **EP 1 945 345 B1**

(12) **EUROPÄISCHE PATENTSCHRIFT**

(45) Veröffentlichungstag und Bekanntmachung des Hinweises auf die Patenterteilung:
**11.07.2012 Patentblatt 2012/28**

(21) Anmeldenummer: **06806617.4**

(22) Anmeldetag: **25.10.2006**

(51) Int Cl.:
**B01J 19/00** (2006.01)   **C01C 3/02** (2006.01)

(86) Internationale Anmeldenummer:
**PCT/EP2006/010436**

(87) Internationale Veröffentlichungsnummer:
**WO 2007/048641 (03.05.2007 Gazette 2007/18)**

(54) **REAKTORSYSTEM MIT EINEM MIKROSTRUKTURIERTEN REAKTOR SOWIE VERFAHREN ZUR DURCHFÜHRUNG EINER CHEMISCHEN REAKTION IN EINEM SOLCHEN REAKTOR**

REACTOR SYSTEM COMPRISING A MICROSTRUCTURED REACTOR AND METHOD FOR CARRYING OUT A CHEMICAL REACTION IN SUCH A REACTOR

SYSTEME DE REACTEUR COMPRENANT UN REACTEUR MICROSTRUCTURE ET PROCEDE POUR METTRE EN OEUVRE UNE REACTION CHIMIQUE DANS UN REACTEUR DE CE TYPE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **26.10.2005   DE 102005051637**

(43) Veröffentlichungstag der Anmeldung:
**23.07.2008   Patentblatt 2008/30**

(73) Patentinhaber: **MAN Diesel & Turbo SE**
**86153 Augsburg (DE)**

(72) Erfinder:
• **MEYER, Heinrich**
**14109 Berlin (DE)**
• **TSCHINDER, Thomas**
**9560 Feldkirchen (DE)**

(74) Vertreter: **Paustian, Othmar**
**BOETERS & LIECK**
**Oberanger 32**
**80331 München (DE)**

(56) Entgegenhaltungen:
EP-A- 1 188 476         EP-A2- 0 870 541
EP-A2- 1 281 922        WO-A-01/85328
WO-A-02/052045          WO-A-2006/071527
DE-A1-102004 030 819    US-A1- 2002 170 976

• **CARMO. J. PEREIRA: "Environmental friendly processes" CHEMICAL ENGINEERING SCIENCE, Bd. 54, 1999, Seiten 1959-1973, XP002428210 Wilmington (DE), USA**
• **Michael P. Harold et al: "Process engineering in the evolving chemical industry", AIChE Journal, vol. 46, no. 11 16 April 2004 (2004-04-16), pages 2123-2127, DOI: 10.1002/aic.690461105 Retrieved from the Internet: URL:http://www3.interscience.wiley.com/jou rnal/108066776/abstract [retrieved on 2010-02-05]**
• **M.P. Harold: "Process engineering in the evolving chemical industry", AIChE Journal, vol. 46, no. 11 16 April 2004 (2004-04-16), pages 2123-2127, Retrieved from the Internet: URL:http://www3.interscience.wiley.com/jou rnal/108066776/abstract**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Reaktorsystem mit einem mikrostrukturierten Reaktor für chemische Reaktionen sowie ein Verfahren zur Durchführung einer vorzugsweise endothermen chemischen Reaktion in einem derartigen mikrostrukturierten Reaktor, insbesondere zur Herstellung von HCN.

Seit einigen Jahren wird über chemische Mikroreaktoren zur Anwendung bei der Produktion chemischer Stoffe berichtet. Inzwischen sind weit über 1000 wissenschaftliche Publikationen erschienen. Als wichtige Übersichtsartikel und Monographien seien angeführt: Angew. Chem. Int. Ed. 2004, 43, 406-446, A.Renken, Springer Series in Chemical Physics 75, 523-542 (2004); M.Freemantle, Chemical Engineering Journal 98, 1-38 (2004); V.Hessel, H.Löwe, A.Müller, G.Kolb in: Chemical Micro Process Engineering - Processing and Plants, Wiley-VCH, Weinheim, 2005; V.Hessel, S.Hardt, H.Löwe in: Chemical Micro Process Engineering - Fundamentals Modelling and Reactions, Wiley-VCH, Weinheim, 2004; W.Ehrfeld, V.Hessel, H.Löwe in: Microreactors, Wiley-VCH, Weinheim, 2000.

Der häufig verwendete Begriff Mikroreaktor ist allerdings missverständlich. Richtiger sollte von mikrostrukturierten Reaktoren gesprochen werden, denn diese Bauteile können von sehr unterschiedlicher Größe sein und durchaus eine Länge von mehreren Metern aufweisen (Demis-Reaktor: Chemical and Engineering News, Vol. 82, Number 41, 39-43). Zu den mikrostrukturierten Reaktoren im erweiterten Sinne werden auch notwendige Sensoren und Aktuatoren gerechnet, beispielsweise Ventile und Strömungsmesser, pH-Elektroden, optische Messzellen, die die Stoffströme kontrollieren bzw. analysieren. Außerdem sind an den mikrostrukturierten Reaktoren auch geeignete Zu- und Ableitungsstrukturen für die Edukte und die Produkte vorgesehen.

Mikrostrukturierte Reaktoren besitzen charakteristische dreidimensionale Strukturen im unteren Millimeter- und Submillimeterbereich. Es handelt sich dabei in der Regel um Vielkanalreaktoren mit einem hydraulischen Kanaldurchmesser im Bereich von 10 bis zu wenigen tausend Mikrometern. Somit besteht ihr wesentlichstes Unterscheidungsmerkmal zu konventionellen Reaktoren in dem sehr viel höheren Verhältnis der inneren Oberfläche zum Volumen. Die spezifische Oberfläche von Mikrokanälen liegt im Bereich von 1000 bis 50.000 $m^2/m^3$, während die spezifische Oberfläche in typischen Labor- und Produktionsreaktoren bzw. -behältern typischerweise bei etwa 100 $m^2/m^3$ liegt und selten 1000 $m^2/m^3$ übersteigt:

Üblicherweise arbeiten mikrostrukturierte Reaktoren unter laminaren Strömungsbedingungen. Weil der Wärmetransportkoeffizient in diesem Fall umgekehrt proportional zum Kanaldurchmesser ist, erreichen mikrostrukturierte Reaktoren Werte für den Wärmetransportkoeffizienten zwischen 1 und 25 kW/($m^2 \cdot K$). Diese Werte liegen damit über eine Größenordnung höher als die von konventionellen Wärmeaustauschern.

Auf Grund dieser Eigenschaften ergeben sich spezifische Vorteile: Ein schneller Energie- und Stofftransport erlaubt schnelles Heizen, Abkühlen und Mischen. Mischzeiten im Millisekundenbereich und sogar darunter sind erzielt worden. Die damit ermöglichten, gut definierten Verweilzeiten im Reaktor unter nahezu isothermen Bedingungen verbessern die Reaktionsführung erheblich. So lässt sich beispielsweise die Zersetzung instabiler Produkte verhindern, wodurch sich unerwünschte Nebenreaktionen unterdrücken lassen. Dadurch werden die Selektivität und Ausbeute erhöht.

Da die bei der konventionellen Entwicklung chemischer Synthesen verwendeten Geräte im Labormaßstab ganz andere Dimensionen besitzen als in der Produktion, können die bei der Entwicklung im Labor gewonnenen Erkenntnisse über die Verfahrensführung nicht direkt in den großtechnischen Maßstab übertragen werden. Vielmehr wird bei der Produktionsentwicklung in der Regel zunächst eine Pilotanlage aufgebaut, um an dieser weitere Erkenntnisse für die Auslegung einer großtechnischen Produktionsanlage zu gewinnen. Nachteilig ist, dass jede Stufe dieser Verfahrensentwicklung eines eigenen Optimierungszyklus' bedarf, wobei jeder dieser Zyklen in den für die Prozesseinführung benötigten Entwicklungsaufwand eingeht.

Dieser aufwändige und zeitraubende Prozess wird bei der Mikroreaktionstechnik (MRT) ersetzt durch eine Vervielfältigung der Reaktionskanäle ("numbering up"), denn die "Elementarzelle", der Mikrokanal, muss beim "scale-up" nicht verändert werden. Man spricht in der MRT deshalb vom "scale out" oder vom "numbering up". Dabei ist jedoch zu beachten, dass erforderliche Gehäuse oder der Behälter Wärme abführen, so dass ein konstruktiver Aufwand erforderlich ist, um Wärmeverluste zu minimieren. Entsprechendes gilt für die Verteilung großer Stoffströme auf die vielen Mikrokanäle.

Das Wärmemanagement eines mikrostrukturierten Bauteils ist insbesondere bei Reaktionen wichtig, die bei hohen Temperaturen durchgeführt werden. Die meisten Reaktionen bei hoher Temperatur sind Gasphasen-Reaktionen. Der größte Teil davon läuft an heterogenen Katalysatoren ab. Es wird zwischen Festbett- und Fließbettverfahren unterschieden. Bei den Festbettreaktoren werden zwei Varianten unterschieden: Im ersten Falle bestehen die Reaktoren in der Regel aus Rohren (Rohrbündelreaktoren), die mit porösen Formkörpern (pellets) gefüllt werden. Im zweiten Fall sind die Wände oder spezielle Einbauten des Reaktors mit einem meist porösen Katalysatormaterial beschichtet. Im letzteren Fall wird von katalytischen Wandreaktionen gesprochen.

Daneben gibt es die Fließbett-Reaktoren. In diesem Falle wird meist pulverförmiges Katalysatormaterial mit den Reaktionskomponenten durch den Reaktor bewegt. Dabei wird der Katalysator im Kreis gefahren und nach Ablauf der Reaktion von den Produkten abgetrennt.

Der Nachteil dieser klassischen Verfahren zeigt sich insbesondere bei Reaktionen mit starker Wärmetönung. Bei stark exothermen Reaktionen gelingt es häufig nicht, die Reaktionswärme ausreichend abzuführen. Dann kommt es zu lokalen Überhitzungen (hot spots). Unerwünschte Nebenreaktionen, die die Ausbeute vermindern, oder eine Verkokung des Katalysators sind dabei auftretende bekannte Probleme. Bei stark endothermen Reaktionen bereitet hingegen die Energiezufuhr ein Problem. Das Hauptproblem ist der unzureichende Wärmetransport in konventionellen Reaktoren, d.h. es stellen sich unerwünschte adiabatische Effekte ein, die oft nicht ausreichend unterdrückt werden können. Als Idealfall einer chemischen Reaktionsführung werden aber in aller Regel isotherme Reaktionsbedingungen angestrebt.

Adiabatische Effekte können bei konventionellen Anlagen zum "Durchgehen" einer Reaktion führen und sind auch die Ursache von Explosionen. Im Gegensatz dazu sind partielle Oxidationen mit reinem Sauerstoff bei höherer Temperatur in Mikrokanälen durchgeführt worden. Eine derartige Reaktionsführung wäre in konventionellen Reaktoren völlig ausgeschlossen (vgl. V.Hessel, S.Hardt und H.Löwe, *ebda.,* 308-311).

Durch die kompakte Bauweise und die nahezu isotherme Reaktionsführung eignen sich mikrostrukturierte Reaktoren besonders zur Herstellung gefährlicher und/oder instabiler, sogar explosiver Zwischenprodukte, weil man diese direkt dort erzeugen kann, wo sie für die Weiterverarbeitung benötigt werden. So können beispielsweise die Gesundheit stark gefährdende Zwischenprodukte, wie Propansulton und Phosgen, in einem derartigen mikrostrukturierten Reaktor hergestellt werden und sofort ohne weitere Lagerung weiter verarbeitet werden. So produziert Ciba-Geigy bereits mit einer kleineren Anlagen Phosgen je nach aktuellem Bedarf zur direkten Weiterverarbeitung. Zum Anfahren der Anlage werden nur 5 bis 10 Minuten benötigt (V.Hessel, S.Hardt, H.Löwe, *ebda.,* und I.Stojanovic, "Sicherer Umgang mit Phosgen", Chemie Technik 21, 2, 6-68 (1992)). Auch für den noch giftigeren Cyanwasserstoff, wurde eine *in situ*-Produktion vorgeschlagen (R.S.Benson, J.W.Ponton, Trans. Ind. Chem. Eng. 71, A2, 160-168 (1993)). Insbesondere bei Verwendung von instabilen Zwischenprodukten können diese schnell zu gewünschten Endprodukten weiterverarbeitet werden. Die Lagerung und der Transport gefährlicher Arbeitsstoffe werden eliminiert oder zumindest stark reduziert.

Die Vorteile der MRT bestehen daher in einer Prozessintensivierung, einer inhärenten Prozesssicherheit, erweiterten Reaktionsbedingungen, einem sicheren Arbeiten innerhalb von Explosionsgrenzen, einer dezentralen Produktion, d.h. am Einsatzort des Produkts, und einer beschleunigten Verfahrensentwicklung.

Zur Herstellung von mikrostukturierten Reaktoren gibt es bereits verschiedene Methoden: Eine Übersicht findet sich in V.Hessel, H.Löwe, A.Müller, G.Kolb, *ebda.,* 385-391 und in W.Ehrfeld, V.Hessel, V.Haverkamp in: Microreactors, Ullmann's Encycopedia of Industrial Chemistry, Wiley-VCH, Weinheim 1999. Die Herstellung besteht in der Regel aus zwei wesentlichen Schritten, nämlich der Erzeugung der Mikrostruktur in den einzelnen Lagen, d.h. in der Bearbeitung von Blechen oder Platten aus geeigneten Materialien, und dem Stapeln der Lagen, dann dem Fügen der Lagen oder dem Zusammenbau zum eigentlichen Reaktor, schließlich dem Anbringen von Anschlüssen für die Leitungen der Reaktanten und gegebenenfalls der Wärmetransportmedien.

Beispielsweise kann ein solcher Reaktor durch Stapeln von mehreren Kupferfolie hergestellt werden, in die zur Bildung von Strömungskanälen mittels eines Diamantwerkzeuges Rillen eingeritzt werden. Zur genauen und reproduzierbaren Herstellung der feinen Strukturen wird ein für solche Zwecke geeigneter Mikropositioniertisch benötigt. D.Hönicke, G.Wießmeier, "Heterogeneously Catalyzed Reactions in a Microreactor", in: W.Ehrfeld (Hrsg.): Microsystem Technology for Chemical and Biological Microreactors, DECHEMA Monographie Band 132, VCH Verlagsgesellschaft, Weinheim 1996, 93-107, haben die entstehenden Mikrokanäle durch partielle Oxidation zu Kupfer(I)-Oxid umgewandelt, um darin die oben beschriebene Reaktion durchführen zu können.

Des Weiteren ist der Einsatz des LIGA-Verfahrens (LIGA: Lithographie, Galvano-Formung, Abformung) zur Herstellung derartiger Reaktoren beschrieben worden. Bei diesem Verfahren wird eine Kunststoffschicht, meistens Polymethylmethacrylat, mittels Synchrotron-Strahlung belichtet und anschließend entwickelt. Die derart erzeugte Struktur wird elektrolytisch mit einem Metall ausgefüllt. Die Metallstruktur kann dann in weiteren Verfahrensschritten mittels einer Kunststoffreplizierung weiter abgeformt werden. Ein derartiges Verfahren ist von W.Ehrfeld, H.Lehr, in: Radiat. Phys. Chem., Band 45 (1995), 349-365, beschrieben worden. Eine mit dem LIGA-Verfahren verwandte Technik, die ohne die sehr aufwendige Synchrotron-Strahlung auskommt, ist das so genannte Laser-LIGA-Verfahren. Hierbei wird die Kunststoffschicht aus PMMA mit einem leistungsfähigen UV-Laser strukturiert und anschließend wie im LIGA-Verfahren galvanisch abgeformt (W. Ehrfeld et al., "Potentials and Realization of MicroreactorsA, in: DECHEMA Monographie Band 132, 1-29.

Auch die Methoden, die in der Halbleiterindustrie zur Strukturierung von Siliziumoberflächen entwickelt worden sind, sind zur Herstellung von mikrostrukturierten Reaktoren übernommen worden. Beispielsweise ist ein Verfahren von J.J.Lerou et al., "Microfabricated Minichemical Systems: Technical Feasibility", in: DECHEMA Monographie Band 132, 51-69, beschrieben worden, bei dem drei geätzte Silizium-Wafer und zwei Wafer als Außenseiten miteinander verbunden werden. Ferner wird ein mit polykristallinen Silberpartikeln gefüllter Wärmeaustauscher, der ebenfalls als mikrostrukturierter Reaktor ausgebildet ist, verwendet.

In DE 19708472 A1 wird ferner ein Herstellverfahren für einen chemischen mikrostrukturierten Reaktor beschrieben, der mindestens ein Substrat mit Metalloberflächen mit Fluidkanälen sowie Zu- und Ableitungen für Fluide aufweist. Bei dem Verfahren werden zunächst Fluidkanalstrukturen auf den Oberflächen des Substrats mittels photolithographischer oder Siebdruckverfahren und die Fluidkanäle durch Metallabtrags- oder -auftragsverfahren gebildet. Die Metallabtrags- oder -auftragsverfahren werden mittels galvanotechnischer Methoden durchgeführt.

Mit den bekannten Verfahren zur Herstellung sind, von wenigen Ausnahmen abgesehen, nur Laborreaktoren hergestellt worden, deren Größe nur wenige Zentimeter beträgt und mit denen die grundsätzliche Machbarkeit wichtiger Synthesen nachgewiesen wurde oder zumindest vom Konzept her demonstriert werden sollte. Ziel dieser Arbeiten war es, vor allem die wissenschaftlichen Grundlagen für eine spätere industrielle Verfahrensentwicklung und Nutzung zu erarbeiten. Dementsprechend finden sich auch keine konkreten Hinweise, wie industriell einsetzbare mikrostrukturierte Apparate zu konstruieren und mit vertretbaren Kosten zu fertigen sind. Obwohl die grundsätzlichen Vorzüge der MRT durch umfangreiche Literatur belegt sind, ist die großtechnische, industrielle Nutzung bislang nicht gelungen. Das liegt vor allem daran, dass die Verfügbarkeit größerer, leistungsfähiger Module, die über die Laboranwendungen hinausgeht, noch nicht gegeben ist. Der Grund dafür ist, dass die industrielle Fertigung solcher Apparate noch ungelöst ist und dass die bisher bekannten Reaktortypen, abgesehen von Sonderfällen, für eine industrielle Fertigung entweder gar nicht oder nur mit Einschränkungen geeignet sind.

Nur für Flüssigphasen-Reaktionen gibt es inzwischen kommerzielle Produkte, vor allem für Laboranwendungen. Die Herstellkosten der Komponenten sind aber noch immer sehr hoch.

Im Gegensatz hierzu ist der Stand der Technik in Bezug auf katalytische Gasphasen-Anwendungen weit weniger fortgeschritten als bei Flüssigphasenanwendungen. Gasphasen-Reaktionen werden meist bei höherer Temperatur und größtenteils heterogenkatalytisch durchgeführt. Wegen der großen wirtschaftlichen Bedeutung dieser Reaktionen im Bereich der Basischemikalien, Petrochemie und Erdölraffinerie ist das Interesse an einer Nutzung der MRT naturgemäß besonders groß. So gibt es eine umfangreiche Literatur, in der Vorschläge gemacht werden, wie wirtschaftlich bedeutende Reaktionen unter Einsatz der MRT vorteilhaft realisiert werden könnten. Unter dem Stichwort "Miniplant" entstanden schon seit Anfang der 90er Jahre solche Vorschläge für fast alle wichtigen Großsynthesen, darunter auch für HCN nach dem Andrussow- und dem BMA-Verfahren. Demgegenüber bleibt festzustellen, dass bislang keiner dieser Vorschläge in der Praxis venrvirklicht werden konnte. Das liegt an einer ganzen Reihe grundsätzlicher Schwierigkeiten, die vor dem industriellen Einsatz noch überwunden werden müssen.

Das beginnt mit der Katalysatorbeschichtung: Da eine gleichmäßige Beschichtung der Kanäle eines fertigen Reaktors in einem "post-coating"-Verfahren in einer vorgegebenen Schichtdicke mit einem heterogenen Katalysator naturgemäß größte Schwierigkeiten bereitet, versucht man, dieses Problem zu umgehen. So wurden bislang bei praktisch allen Versuchen, größere Module herzustellen, bereits mit Katalysator beschichtete, mikrostrukturierte Bleche oder Platten verwendet, die dann durch stabile und entsprechend voluminöse mechanische Vorrichtungen zusammen gehalten bzw. zusammen gepresst werden. Diese Methode, die Mikrokanäle vor dem Zusammenbau des Reaktors mit Katalysator zu beschichten, bezeichnet man als "pre-coating"-Verfahren. Das zugehörige Konstruktionsprinzip des Reaktors erfordert zwingend Dichtungen, die den chemischen, thermischen und mechanischen Belastungen beim Betrieb widerstehen müssen. Aus technischen und Sicherheitsgründen kann in vielen Fällen auf ein zusätzliches Gehäuse nicht verzichtet werden.

Bei Verwendung eines zusätzlichen Gehäuses gehen dagegen wesentliche Vorteile der MRT verloren: Die mechanische Vorrichtung zum Verbinden der Lagen in Form massiver Bolzen und Schraub- und Haltevorrichtungen und auch das Gehäuse leiten Wärme ab. Die voluminöse und aufwändige Konstruktion verteuert die Anlage, verringert deren Leistungsfähigkeit durch Wärmeverluste, erzeugt Hitze an unerwünschten Stellen, verringert die Sicherheit und Zuverlässigkeit der Apparate und benötigt zusätzlich sehr viel Platz.

Für hohe Temperaturen und aggressive Medien gibt es keine zuverlässigen Dichtungen, so dass Verfahren, die Temperaturen von über 300°C erfordern, in der Praxis nicht verfügbar sind. Aber selbst im Temperaturbereich von deutlich unter 300°C sind Dichtungsprobleme kritisch.

Die einzige bekannte Anlage, in der eine industrielle katalytische Gasphasenreaktion zumindest demonstriert wurde, entstand im Rahmen von DEMiS® (Marke von Uhde, Dortmund), eines vom BMBF (Bundesministerium für Bildung und Forschung der Bundesrepublik Deutschland) geförderten Projektes. Die wirtschaftliche Konkurrenzfähigkeit gegenüber klassischen Verfahren war jedoch nicht Ziel dieses Vorhabens. In diesem Falle wird Propen mit gasförmigem Wasserstoffperoxid bei maximal 150°C zu Propylenoxid umgesetzt. Auch dieser Reaktor benötigt Dichtungen, Verschraubungen und ein Gehäuse. Es handelt sich auch nicht um eine Hochtemperatursynthese. Die bestehenden Probleme beim Pre-Coating lassen sich nur dann durch Anwendung von Fügetechniken überwinden, wenn die Fügetemperatur den Katalysator nicht desaktiviert. Geeignete Fügetechniken sind inzwischen bekannt, werden aber kommerziell noch nicht genutzt. Hierzu wird beispielsweise auf DE 10251658 A hingewiesen.

Abgesehen von den mikrostrukturierten Wärmeaustauschern der Firma Heatric, GB gibt es derzeit noch keine kommerziellen mikrostrukturierten Apparate für chemische Gasphasenreaktionen für die Produktion, ja nicht einmal für Laboranwendungen. Die bislang bekannten mikrostrukturierten Reaktoren für Hochtemperatur-Gasphasenreaktionen zielen meist darauf ab, Modellreaktionen oder wirtschaftlich und technisch bedeutende Reaktionen zu studieren und die jeweiligen Vorteile der MRT zu demonstrieren, d.h. sie sind im wesentlichen zum Zweck wissenschaftlicher Grundlagenuntersuchungen hergestellt worden. Als Beispiele einschlägiger Veröffentlichungen hierzu seien genannt: zur selektiven Hydrierung von Cyclododecatrien: D.Hönicke, G.Wießmeier, *ebda.*, und zur partiellen Oxidation von Propen zu Acrolein: O.Wörz, K.P.Jäckel, T.Richter, A.Wolf, "Microreactors, a New Efficient Tool for Optimum Reactor Design", in: Proc. of 2nd International Conference on Microreaction Technology, Topical Conference Preprints, March 9-12, New Orleans 1998, 183-185. Diese bekannten Reaktoren sind von der Konzeption her als Basis für größere Durchsätze unter Praxisbedingungen ganz eindeutig weder vorgesehen noch verwendbar. Eine gute Übersicht geben auch G.Kolb und V.Hessel, Chemical Engineering Journal. 98, 1-38 (2004) und V.Hessel, W.Ehrfeld, K.Golbig, O.Wörz, "Mikroreaktionssystem für die Hochtemperatursynthese", GIT Labor-Fachzeitschrift 1999, 1100-1103.

Neben den technischen Schwierigkeiten, größere Reaktormodule zu fertigen und die Reaktionskanäle in den Modulen mit Katalysatoren zu beschichten, gelingt es bisher nicht oder nur sehr unvollkommen, die sehr großen Temperaturunterschiede, die in den sehr kompakten mikrostrukturierten Systemen auf engstem Raum auftreten, bei größeren Modulen zu beherrschen.

Eine technisch sehr bedeutende katalytische Hochtemperatursynthese ist die von HCN. HCN (Cyanwasserstoff) wird als wichtiger Synthesebaustein zur Herstellung bedeutender chemischer Produkte wie Adipinsäurenitril (zur Herstellung von Nylon), Methylmethacrylat (zur Herstellung von transparenten Thermoplasten (Plexiglas), Klebstoffen, Farben und Lacken) und zahlreicher anderer Zwischenprodukte eingesetzt.

Cyanwasserstoff wird großtechnisch hauptsächlich nach dem Andrussow-Verfahren und dem Degussa-Verfahren produziert. Beim Andrussow-Verfahren werden Methan, Ammoniak und Sauerstoff bzw. Luft an einem mehrlagigen katalytischen Netz aus Platin mit 10% Rhodium bei ca. 1100°C umgesetzt. Die Reaktion ist exotherm:

$$CH_4 + NH_3 + 3/2\ O_2 \rightarrow HCN + 3\ H_2O_{gas}\ \text{-}\ 473,9\ kJ/mol$$

Beim BMA (**B**lausäure **M**ethan **A**mmoniak)-Verfahren von Degussa wird auf den Sauerstoff verzichtet. Stattdessen wird mit einem Ammoniak-Überschuss gearbeitet. Als Methanquelle wird meist Erdgas verwendet. Geringe Anteile höherer Kohlenwasserstoffe werden toleriert. Da die stark exotherme Bildungsreaktion von Wasser entfällt, ist die Reaktion stark endotherm (Reaktionsenthalpie: $\Delta H$ = -251,6 kJ/mol), d.h. sie erfordert eine entsprechende Energiezufuhr. Der Reaktor besteht aus 10 bis 30 keramischen Rohren, die innen mit Platin beschichtet sind. Wärme wird über Brenner zugeführt, die mit Methan (Erdgas) betrieben werden.

Die überschüssige Energie der Reaktionsprodukte wird meist zur Dampferzeugung verwendet. Da die Gleichgewichtskonzentration von HCN bei 1100°C 0% beträgt, ist es äußerst wichtig, die Reaktionszeit so kurz wie möglich zu halten und das Reaktionsgas so schnell wie möglich auf eine Temperatur von weniger.als 400°C abzuschrecken. In einigen Fällen kann sogar auf die Kondensation verzichtet und das Reaktionsgas direkt zur Synthese verwendet werden. Der Wasserstoff stört dabei in der Regel nicht.

Daneben gibt es noch ein nicht-katalytisches Hochtemperaturverfahren, das Shavinigan-Verfahren, bei dem die Reaktionswärme mit Hilfe eines direkt beheizten Wirbelbettes aus Kohleteilchen zugeführt wird. Hier besteht eine größere Freiheit in der Wahl der Kohlenwasserstoffe: Auch Gemische von niedermolekularen Kohlenwasserstoffen sind mit gutem Erfolg eingesetzt worden (Ullmann, Encyclopädie der technischen Chemie, 4. Aufl. 1972 Band 9, 658-660; Kirk Othmer, Vol. 7, 756-761).

V.Hessel, W.Ehrfeld, K.Golbig, O.Wörz, *ebda.*, haben ein kleines Mikroreaktionssystem zur Demonstration der HCN-Synthese nach dem Andrussow-Prozess beschrieben. In diesem Falle passieren die Eduktgase zunächst einen Vorheizblock, in dem sie auf bis zu maximal 600°C aufgeheizt und dann über mikroskopisch feine Bohrungen in eine 4 mm lange Mischstrecke überführt werden. Diese Mischstrecke wird bei einer vorgegebenen Strömungsgeschwindigkeit als ausreichend bezeichnet, um eine vollständige Vermischung der Eduktgase zu erreichen. Das aufgeheizte und gemischte Reaktionsgas durchströmt dann die Reaktionszone, die von 20 Bohrungen mit einem Durchmesser von 70 $\mu$m in einer 250 $\mu$m dicken, elektrisch beheizten Platinfolie gebildet wird. Die Mischstrecke, die elektrischen Zuführungen für die elektrische Widerstandsheizung und die Katalysatorfolie sind in eine 5 mm dicke keramische Katalysatoraufnahme eingebettet. Die Bohrungen werden mittels eines speziellen auf die Erfordernisse der Mikrotechnik angepassten Funkenerosionsverfahrens gefertigt. Hinter der keramischen Katalysatoraufnahme schließt sich im Abstand von 300 $\mu$m ein mikrostrukturierter Wärmeaustauscher an, der das heiße Produktgas innerhalb von 5 ms auf 120°C abkühlt. Die einzelnen Komponenten (Vorheizblock, Katalysatoraufnahme und Wärmeübertrager) sind über Graphitfolien gegeneinander abgedichtet. Die elektrischen Stromzuführungen werden mittels eines metallischen Lotes elektrisch kontaktiert. W.Ehrfeld et al., in: "Microreactors", Wiley VCH, Weinheim 2000, 217-224, beschreiben eine ähnliche Anordnung, in der der Vorheizblock aus Stahl besteht und der Katalysator auf einem keramischen Träger aufgebracht ist. In diesem Falle werden die Eduktgase auf mehr als 1000°C aufgeheizt. Die Aufenthaltszeit der Reaktionsgase im Bereich der Reaktionszone wird auf 0,1 - 1 ms geschätzt. Die hohe Temperatur wird durch eine elektrische Widerstandsheizung erreicht.

Der von Ehrfeld *et al.* beschriebene mikrostrukturierte Demonstrationsreaktor ist naturgemäß zur technischen Herstellung von HCN ungeeignet, weil sich der Reaktor (widerstandsbeheizte Platinfolie / T = 1000°C) nicht in ein produktionstaugliches Mikrosystem integrieren lässt, insbesondere weil die einzelnen Komponenten des Systems aus unterschiedlichen Materialien gefertigt werden. Da es keine Fügetechniken gibt, um die verschiedenen Materialien zu verbinden, müssen Komponenten mechanisch verbunden und mittels Graphitdichtungen gegeneinander abgedichtet werden. Auf Grund der unterschiedlichen thermischen Ausdehnungskoeffizienten der verschiedenen Materialien kommt es insbesondere beim Hochfahren und Abschalten der Anlage zu starken mechanischen Spannungen, der die Dichtungen zusätzlich zur hohen Betriebstemperatur ausgesetzt sind. Aus diesem Grunde dürfte die Anlage im Dauerbetrieb nicht gasdicht sein. Eine sichere Abdichtung des Reaktors gegen austretendes, hochgiftiges Blausäuregas ist aber zwingend erforderlich.

Zum anderen werden thermisch hochbelastete Stromzuführungen realisiert, die Wärme von der die Reaktionszone bildenden Platinfolie ableiten. Dies gelingt nur mit aufwändigen konstruktiven Maßnahmen. Für den Zusammenbau von Mikrostrukturkomponenten aus unterschiedlichen Materialarten für den Hochtemperaturbereich stehen zur Umgehung von Dichtungen bislang auch keine Fügetechniken zur Verfügung, so dass dieses grundsätzliche Hindernis nicht eliminiert werden kann. Diese Probleme gelten ausnahmslos auch für die anderen bekannten Beispiele von mikrostrukturierten Hochtemperaturreaktoren. Sie sind durchweg als Demonstratoren für die Machbarkeit meist wirtschaftlich attraktiver Synthesen konzipiert worden. Somit sind alle diesbezüglichen bekannten Konstruktionsprinzipien für den Einsatz in der industriellen Praxis ungeeignet. Der Stand der MRT erlaubt es daher derzeit nicht, Hochtemperatur-Gasreaktionen in der industriellen Produktion zu realisieren, weil noch keine Fertigungstechnologie für industriell einsetzbare Reaktoren existiert.

Der vorliegenden Erfindung liegt daher die Aufgabe zugrunde, die vorgenannten Probleme bei der Anwendung der MRT auf die chemische Synthese von Stoffen bei hohen Temperaturen, vorzugsweise von schnellen Gasreaktionen, zu lösen. Die vorgenannten Schwierigkeiten des industriellen Einsatzes der MRT bei Hochtemperatursynthesen, insbesondere katalytischen Gasphasenreaktionen, sollen mittels eines möglichst einfachen und kostengünstigen mikrostrukturierten Apparats überwunden werden. Dabei sollen auch die Probleme bei bekannten Vorrichtungen bezüglich der Wärmeisolierung und Abdichtung gegen Gasaustritt behoben werden. Die Reaktoren sollen mittels geeigneter Fügetechniken, z.B. durch geeignete Schweiß- oder Diffusionslötverfahren, in einfacher Weise industriell hergestellt werden können. Des Weiteren liegt der Erfindung die Aufgabe zugrunde, spezielle mikrostrukturierte Reaktoren zur Herstellung von HCN zu finden, mit denen diese Verbindung in möglichst hoher Ausbeute und gleich bleibender Qualität und unter den in der Praxis üblichen Anforderungen hinsichtlich der Betriebssicherheit erhalten wird. Dabei wird das an sich vorteilhafte stark endotherme Degussa (BMA)-Verfahren bevorzugt.

Die vorstehende Aufgabe wird durch das Reaktorsystem nach Anspruch 1 und das Verfahren nach Anspruch 13 gelöst. Bevorzugte Ausführungsformen der Erfindung sind in den Unteransprüchen angegeben.

Die vorliegende Erfindung bezieht sich auf ein Reaktorsystem mit einer oder mehreren beheizbaren mikrostrukturierten Reaktionszonen zur Durchführung einer chemischen Reaktion in einem mikrostrukturierten Reaktor. Anstelle einer Wärmequelle, die für mikrostrukturierte Reaktoren üblich ist, beispielsweise einer herkömmlichen elektrischen Widerstandsheizung oder einer Beheizung durch Wärme übertragende Fluide oder auch durch die Nutzung einer Energie liefernden Reaktion innerhalb des Reaktors, wird eine kontaktlose Heizung eingesetzt. Somit we en die bekannten Probleme vermieden und wird zudem eine besonders kostengünstige Herstellung praxisgerechter, mikrostrukturierter Hochtemperaturreaktoren ermöglicht.

Die kontaktlose Heizung bietet eine Reihe wesentlicher Vorzüge: Elektrische Zuleitungen, mechanische Haltevorrichtungen und Gehäuse der bekannten mikrostrukturierten Reaktoren sind thermisch nur begrenzt belastbar; außerdem leiten sie Wärme ab. Derartige Probleme stellen sich bei dem erfindungsgemäßen System überhaupt nicht ein, da der eigentliche Reaktor bzw. die Reaktionszone von der Umgebung weitgehend abgeschirmt ist und Energieverluste daher auf ein Mindestmaß reduziert werden können. Dies gilt insbesondere dann, wenn der mikrostrukturierte Reaktor in einem evakuierten Gefäß untergebracht ist. Somit bietet der erfindungsgemäße Reaktor den Vorteil, dass er gegenüber der Umgebung effizient wärmeisoliert werden kann und beispielsweise alle Zu- und Ableitungen und die erforderlichen Dichtungen, Flansche usw. thermisch unbelastet bleiben. Auch sind keine Wärmezufuhrmittel, beispielsweise Leitungen für Wärmetransportmedien oder elektrische Zuleitungen zu den heißen Zonen des Reaktors erforderlich. Dies ermöglicht eine einfache Wartung, da eine Demontage des Reaktors vorgenommen werden kann, ohne dass derartige Energiezuführungsmittel demontiert werden müssten. Darüber hinaus werden in heißen Zonen des Reaktors keine Dichtungen benötigt. Die kontaktlose Heizung lässt sich auch vorteilhaft mit einer kontaktlosen Temperaturmessung, beispielsweise mittels eines Pyrometers kombinieren, wodurch eine einfache und genaue Regelung der chemischen Reaktion im Reaktor möglich ist.

Durch die Anwendung beispielsweise einer Strahlungsheizung, kann eine gleichmäßige, genau definierte Erwärmung des mikrostrukturierten Reaktors realisiert werden. Dies ist insbesondere im Hinblick auf die geforderte Gleichmäßigkeit der Reaktionsbedingungen im Reaktor von größter Bedeutung, um die systembedingten Vorteile der MRT nicht durch eine unerwünschte Temperaturverteilung im Reaktor zu schmälern.

Zur Erwärmung können Strahlungsquellen verwendet werden, die in verschiedenen Bereichen des elektromagnetischen Spektrums arbeiten. Hierzu kann beispielsweise die Strahlungsenergie einer intensiven optischen Strahlungsquelle, etwa der eines Lichtbogens, eines Lasers, oder eines Infrarotstrahlers genutzt werden. Auch Mikrowellen können verwendet werden. Die so erzeugte elektromagnetische Strahlung kann durch geeignete Vorrichtungen, beispielsweise durch entsprechend geformte Spiegel bzw. Resonatoren auf den Reaktor fokussiert werden.

Ebenfalls indirekt, aber nach einem unterschiedlichen physikalischen Prinzip arbeitet die induktive Erwärmung mittels Induktionsheizung. Für die Erwärmung sorgen hier induzierte elektrische Wirbelströme. Voraussetzung ist ein elektronenleitendes Material. Dabei können sehr hohe Energien übertragen werden. Während IR-Strahler typischerweise 0,1 $kW/cm^2$ liefern, können mit induktiver Erwärmung bis zu 10 $kW/cm^2$ erreicht werden.

Wegen der gleichmäßigen Erwärmung und der einfachen Erzeugung hoher Leistungen und der nachstehend noch weiter ausgeführten weiteren Vorteile wird die induktive Heizung für mikrostrukturierte Reaktoren bevorzugt.

Der mikrostrukturierte Reaktor kann beispielsweise in einem Wechselspannungsfeld platziert und durch Induktion von Wirbelströmen erwärmt werden. Die bevorzugte Frequenz einer derartigen Induktionsheizung ergibt sich aus den Abmessungen des Reaktors und eines den Reaktor vorzugsweise umgebenden und meist in Form einer Spule vorliegenden Induktors, der angestrebten Eindringtiefe s und der benötigten Wirkleistung $P_w$. In der Technik werden Frequenzen von 50 Hz bis über 10 MHz verwendet. Es werden Netzfrequenz-, Mittelfrequenz- und Hochfrequenzanlagen unterschieden. Wie weiter unten ausgeführt wird, ist der Mittelfrequenzbereich bevorzugt. Früher wurden Röhrengeräte eingesetzt, die im Hochfrequenzbereich arbeiten. Heute werden auf Halbleiterbasis arbeitende Anlagen verwendet. Diese arbeiten bevorzugt im Mittelfrequenzbereich.

Das Prinzip der induktiven Erwärmung und die Auslegung von induktiven Erwärmungsvorrichtungen sind in der Fachliteratur beschrieben, beispielsweise in den oben genannten Monographien sowie in "Elektrotechnologie", Hrsg. H.Conrad, R.Krampitz, VEB Verlag Technik Berlin, 1983, 58-114; G.Benkowski, "Induktionserwärmung", Berlin Verlag Technik, 1990; R.E.Haimbaugh "Practical Induction Heat Treating", ASM International Materials Park, OH 44073-0002, Dec 2001; V.Rudnev, D.Loveless, R.Cook, M.Black "Handbook of Induction Heating", Marcel Dekker Inc., New York und Basel, 2003). Induktionsheizungen können beispielsweise von Inductoheat, Rasison Heights, Mi 248 585 9393, US, bezogen werden. Durch die in den letzten Jahren immer weiter verbesserte Mikroprozessorsteuerung ist heute eine hohe Reproduzierbarkeit der Erwärmungsergebnisse möglich.

Aus US 2002/170976 A1 ist ein Mikroreaktor mit tubulären Reaktionszonen bekannt. Indirekte Beheizung findet mittels Heizspiralen statt.

In "Process engineering in the evolving chemical industry". Michael P..Harold et al, AIChE Journal, Vol. 26 Issue 11, S. 2123 — 2127, published Online: 16 Apr 2004 (http://www3.interscience.wiley.com/journal/108066776/abstract) ist eine verkleinerte (scaledown) Produktionsanlage für HCN beschrieben, bei der die erforderliche Reaktionsenergie induktiv zugeführt wird.

Die induktive Erwärmung ist bereits auf anderen Gebieten der Technik als für die chemische Synthese eingesetzt worden, beispielsweise bei der Induktionshärtung von kohlenstoffhaltigen Stählen, dem Diffusionsglühen, Erschmelzen von Legierungen, der Pulvermetallurgie, der Fügetechnik und bei Beschichtungstechniken sowie dem Metallguss: Semisolid Casting (SSM).

Obwohl (annähernd) rotationssymmetrische Gegenstände wie Antriebwellen, Zahnräder, Kurbelwellen usw. für eine induktive Erwärmung besonders geeignet sind, lassen sich durch die Verwendung rechteckiger Spulen auch eckige Objekte wie Platten oder Bänder verarbeiten (V.Rudnev, D.Loveless, R.Cook und M.Black, Handbook of Induction Heating, Marcel Dekker, New York — Basel, 2003 , 555-579). Die übertragene Leistung überdeckt einen sehr großen Bereich vom tragbaren 10 kW-Generator bis zu großen Einheiten von bis zu über 30 Megawatt. Es lassen sich ohne Probleme routinemäßig sehr hohe Temperaturen von weit über 1000°C in sehr kurzer Zeit erreichen. In manchen Fällen werden die Bauteile nur an der Oberfläche erwärmt. Bei anderen Anwendungen, beispielsweise beim Gesenkschmieden, müssen die Bauteile sehr gleichförmig, d.h. auch im Inneren, erwärmt werden. Die Leistungsausbeute gut angepasster Systeme liegt hoch: Es wird ein Wirkungsgrad von 70 bis 80% erreicht, teilweise ein noch höherer.

Da das induktive Verfahren die Erwärmung sehr unterschiedlich geformter Objekte erlaubt und nicht nur (annähernd) axialsymmetrischer Objekte, können moderne kommerzielle Geräte zur Erwärmung von Metallplatten mit mehreren Dezimetern Breite und einigen Zentimetern Dicke verwendet werden (G.Benkowski, "Induktionserwärmung", Berlin-Verlag Technik, 1990), d.h. sie sind grundsätzlich auch für industrielle Mikroreaktor-Module, deren Größe vergleichbar ist, einsetzbar.

Um optimale Ergebnisse bei der induktiven Heizung zu erzielen, sind neben der Wahl der Frequenz der Reaktor und der Induktor, d.h. insbesondere die Spulenanordnung, in geeigneter Weise anzupassen. Bei induktiver Erwärmung ist die Eindringtiefe des Feldes bekanntlich in erster Linie frequenz- und materialabhängig. Besteht der Reaktor beispielsweise aus Stahl, ist der Reaktorquerschnitt beispielsweise rechteckig, liegt dessen Höhe im Bereich von 2,5 bis 8 mm und soll der Reaktor auf eine Temperatur von 1200°C erwärmt werden, so wird beispielsweise eine Frequenz von ca. 500 kHz gewählt. Bei einem dickeren Bauteil von 14 bis 60 mm soll die Frequenz dann bei ca. 10 kHz liegen. Die Eindringtiefe s ist bei niederfrequenter Erwärmung größer als bei Induktionsfeldem mit einer höheren Frequenz. Die vorgenannten Angaben sind Richtwerte. Die optimale Frequenz muss jeweils experimentell ermittelt werden (G.Benkowsky, *ebda.*, 1990, 137).

Somit stehen folgende Optimierungsparameter zur Verfügung: Lage, Anordnung und Dimensionierung der Kanäle im Reaktor, beispielsweise deren Abstand vom Induktor (Induktionsspule), die Anordnung und Form bzw. Geometrie des Induktors oder der Induktoren, deren Abstand von der Reaktoroberfläche sowie die Arbeitsfrequenz des die Energie liefernden Generators.

Soll eine hohe Frequenz eingesetzt werden, ist es vorteilhaft, die Kanäle in einer schmalen Zone nahe der Außenwand des Reaktorblocks anzuordnen. Ist die Frequenz eines vorhandenen Generators für einen Reaktor dagegen nicht optimal geeignet, so kann die Energieaufnahme im Induktionsfeld durch eine besonders günstige Bauform des Reaktors, etwa in Form eines Zylinders oder eines Hohlzylinders, und eine entsprechende Anordnung der Kanäle im Reaktor trotzdem noch so angepasst werden, dass eine sehr gleichmäßige Erwärmung der Reaktorkanäle erreicht wird. Ein solcher Fall wurde im weiter unten angegebenen Beispiel der Cyanwasserstoff-Synthese nach dem BMA-Verfahren verwirklicht.

Um einen möglichst hohen Wirkungsgrad des Induktors zu erzielen, soll der spezifische elektrische Widerstand des Induktors klein, der des Werkstückes bzw. des Apparatematerials hingegen möglichst hoch sein. Dass der spezifische elektrische Widerstand eines aus Metall bestehenden Reaktorblockes mit der Temperatur ansteigt, kommt diesem Bemühen entgegen. Den gleichen Einfluss hat das Verhältnis der Permeabilitäten.

Die Reaktionszone im Reaktor ist durch einen Reaktorblock mit darin enthaltenen Reaktionskammern gebildet.

Die Reaktionskammern des Reaktors unterscheiden sich nicht grundsätzlich von denen bekannter Systeme und werden vorzugsweise durch Strömungskanäle gebildet. Die Kanäle werden nach bekannten Prinzipien dimensioniert. Zur Ermittlung der Kanalgeometrie, z.B. des hydraulischen Durchmessers, werden in der Regel die gewünschte Verweilzeit der Eduktmoleküle im Reaktor und, falls bekannt, die thermodynamischen und kinetischen Parameter der betreffenden Reaktion berücksichtigt (V.Hessel, S.Hardt, H.Löwe, *ebda.*, 28-50). Die Anordnung, d.h. die Lage der Kanäle im Reaktor, kann allerdings verschieden sein, um den Voraussetzungen bzw. den Bedingungen der indirekten Erwärmung Rechnung zu tragen. So sind schließlich auch der Abstand der Kanäle zueinander und deren Lage zur Reaktoroberfläche festzulegen. Das kann durch Simulationsrechnungen oder empirisch ermittelt werden.

Durch entsprechende Anpassungen können eine gleichmäßige Temperatur in den Kanälen erzielt und damit die Reaktionsbedingungen für die Bildung von Produkten in gewünschter Weise definiert eingestellt werden. Der Querschnitt der Kanäle kann, wie bei bekannten Systemen kreisförmig, halbkreisförmig oder rechteckig sein, grundsätzlich aber auch eine andere Form haben, die sich auf Grund der jeweiligen Aufgabenstellung als vorteilhaft erweist.

Um einen verbesserten Wärmetransport von der Mantelfläche des Reaktorblocks in dessen Inneres zu erreichen, kann der Reaktorblock zusätzlich Kammern bzw. Kanäle für ein Wärmetransportmedium enthalten. In diesen Kammern kann ein Wärmetransportfluid zirkulieren, um Wärme durch Konvektion innerhalb des Reaktorblocks, beispielsweise von außen nach innen, zu transportieren. Dieses Wärmetransportfluid wird je nach der Reaktionstemperatur und Materialverträglichkeit gewählt. Wird wie im Falle der HCN-Synthese eine Reaktionstemperatur von mindestens 1000°C eingestellt, so muss das Wärmetransportfluid eine ausreichende thermische Stabilität aufweisen. Außerdem darf dieses Fluid das Material des Reaktorblocks, insbesondere das Material, aus dem die Wände der Kanäle für das Wärmetransportfluid bestehen, nicht angreifen. Außerdem darf der Dampfdruck des Fluids bei Betriebsbedingungen nicht zu hoch sein. Geeignete Fluide sind beispielsweise niedrig schmelzende, beim Betrieb des Reaktors flüssige Metalle, wie Gallium und Natrium, Metalllegierungen oder auch Salzschmelzen, in denen gegebenenfalls elektronenleitende Partikel suspendiert oder dispergiert sind.

Falls wie in letzterem Falle ein Metall oder ein elektronenleitendes Wärmetransportfluid eingesetzt wird, muss der Reaktorblock nicht notwendigerweise aus Metall oder einem elektronenleitenden Material bestehen, um eine Erwärmung mittels einer Induktionsheizung zu ermöglichen. In diesem Falle kann die eingestrahlte Energie auch in dem in dem Reaktorblock zirkulierenden Wärmetransportmedium absorbiert werden. In einem solchen Fall kann der Reaktorblock beispielsweise auch aus Keramik, Glas oder aus Quarzglas bestehen.

Darüber hinaus ist es auch möglich, den Reaktor aus einer bei höherer Temperatur elektrisch leitfähigen Keramik, wie beispielsweise SiC (Siliciumcarbid), herzustellen und zum induktiven Vorheizen elektronenleitende Vorrichtungen, beispielsweise Bleche oder Stäbe, oder auch ein elektronenleitendes flüssiges Wärmetransportmedium in den Reaktor zu integrieren.

Das flüssige Wärmetransportfluid zirkuliert im Wesentlichen durch Konvektion. Es kann daher zweckmäßig sein, den Reaktor senkrecht anzuordnen. Bei elektronenleitenden flüssigen Wärmetransportfluiden sorgt das induzierte elektrische Feld für eine intensive Strömung und Durchmischung. Demnach werden keine Pumpen benötigt, um das Fluid zu bewegen.

Um zu vermeiden, dass die auf den Reaktorblock übertragene Wärmeenergie durch Konvektion oder Wärmeleitung über die Luft verloren geht, kann der mikrostrukturierte Reaktor in einem evakuierbaren Gehäuse angeordnet sein. Das gilt für alle Reaktortypen, die in dem erfindungsgemäßen System eingesetzt werden können. Ein e-vakuiertes Gehäuse bietet den weiteren Vorteil, dass ein eventuelles Leck im Reaktor analytisch leicht detektierbar ist oder auch durch einen Druckanstieg im Gehäuseinneren schnell erkennbar ist. Es verhindert auch, dass durch ein Leck ausgetretene toxische chemische Verbindungen direkt in die Atmosphäre gelangen.

Das Gehäuse kann beispielsweise ein lang gestrecktes Glas-, Quarzglas- oder Keramikgehäuse, insbesondere in Form eines Rohres mit zylindrischem oder rechteckigem Querschnitt, sein. Dieses Gehäuse (Rohr) kann innenseitig mit einem Wärme reflektierenden Überzug versehen sein, um Verluste durch Wärmestrahlung zu minimieren. Ein solcher Überzug besteht vorzugsweise nicht aus einem elektronenleitenden Material, um zu vermeiden, dass sich der Überzug bei induktiver Beheizung durch das Energiefeld erwärmt. Zusätzlich oder alternativ dazu können auch Wärme reflektierende Einbauten in der evakuierten Zone vorgesehen sein. Für diese gilt hinsichtlich des Materials, aus dem sie bestehen, dasselbe wie für einen Wärme reflektierenden Überzug. Das Gehäuse kann auch selbst gekühlt werden, etwa mit Wasser oder auch mit Luft.

Die Induktionsspule kann sowohl innerhalb oder außerhalb des evakuierbaren oder mit Schutzgas zu spülenden Gehäuses angeordnet sein. Befindet sich die Spule innerhalb des Gehäuses, sind Restriktionen bezüglich des zu verwendenden Gehäusematerials geringer.

Mit dem erfindungsgemäßen Reaktorsystem können vor allem endotherme katalytische und nichtkatalytische chemische Reaktionen, aber auch exotherme Reaktionen, insbesondere bei hohen und sehr hohen Temperaturen, d.h. von 400°C bis zu über 1000°C, realisiert werden. Für den Fall, das der erfindungsgemäße Reaktor Mittel zur Führung eines Wärmetransportfluids oder sonstige geeignete Vorrichtungen zur Wärmeableitung enthält, kann er naturgemäß auch für exotherme Reaktionen, insbesondere Hochtemperaturreaktionen, eingesetzt werden. Letzteres gilt insbesondere wenn ein bei Betriebstemperatur flüssiges Wärmetransportmedium verwendet wird.

Für den Fall, dass mehrere Edukte zur Reaktion gebracht werden sollen, kann dem mikrostrukturierten Reaktor eine Mischzone, beispielsweise in Form eines mikrostrukturierten Mischers, vorgeschaltet werden. Das ist insbesondere dann vorteilhaft, wenn die Edukte in Rohren mit größerem Querschnitt zugeführt werden, da die Mischzeit $t_D$ nach

$$t_D = \frac{d^2}{32 \cdot D}$$

wobei D der Diffusionskoeffizient und d der Rohrdurchmesser sind, bei laminarer Strömung quadratisch mit dem Rohrdurchmesser ansteigt.

Es ist ferner vorteilhaft, den mikrostrukturierten Mischer heizbar auszulegen. Damit können die Edukte vor dem Eintritt in die Reaktionskammern auf eine Temperatur vorgewärmt werden, bei der die Reaktion zwar noch nicht abläuft, die aber bereits so hoch ist, dass eine weitere Erwärmung auf die Reaktionstemperatur im Reaktorblock innerhalb einer äußerst kurzen Zeitspanne möglich ist. Somit können gegebenenfalls Parallelreaktionen und Folgereaktionen besser unterdrückt werden, weil die erforderliche Kontaktzeit in den Reaktionskammern minimiert werden kann, so dass die Reaktionsausbeute erhöht wird.

In einer besonders bevorzugten Ausführungsform wird der mikrostrukturierte Mischer induktiv beheizt. Damit kann dieselbe Heizungsart, wie für den Reaktorblock angewendet werden. Dies ist konstruktiv einfach, da lediglich ein zweiter Induktor (Spule) benötigt wird. Im Falle von Produkten, die bei einer hohen Reaktionstemperatur instabil sind, ist es erforderlich, die aus dem Reaktorblock austretenden heißen Produktgase sehr schnell auf eine ausreichend niedrige Temperatur abzuschrecken, um zu verhindern, dass die Reaktionsausbeute durch Parallel- und Folgereaktionen absinkt. Hierzu ist ein mikrostrukturierter Wärmeaustauscher vorgesehen. Derartige Wärmeaustauscher, wie zum Beispiel Kreuzstrom-Wärmeaustauscher, mit entsprechenden Leistungsdaten sind in der Literatur beschrieben. Sie sollen vorzugsweise aus Metall, insbesondere aus Stahl, oder aus einem der nachfolgend beschriebenen Refraktärmetalle hergestellt sein.

Dementsprechend besteht das erfindungsgemäße Reaktorsystem bevorzugt aus einem (optionalen) Mischer, dem mikrostrukturierten Reaktorblock und dem Wärmeaustauscher. Außerdem können Übergangselemente zwischen dem Mischer und dem Reaktorblock einerseits und dem Reaktorblock und dem Wärmeaustauscher andererseits vorgesehen sein.

Die Materialien, aus denen die genannten Komponenten bestehen, werden vorzugsweise so gewählt, dass diese durch Fügetechniken monolithisch miteinander verbunden werden können. Als Reaktormaterial werden Refraktärmetalle, vorzugsweise ausgewählt aus der Gruppe, umfassend Titan, Tantal, Niob, Molybdän, Wolfram, Legierungen dieser Metalle sowie Nickel-, Kobalt- und Chrom-Basislegierungen und hoch wärmefeste Stähle, bevorzugt.

Auf manchen Materialoberflächen des Reaktorblockes und gegebenenfalls auch des Mischers, des Wärmeaustauschers und der Übergangselemente, insbesondere in den Kanälen, vor allem den Reaktionskammern, lassen sich unter geeigneten Bedingungen chemisch resistente Oberflächenschichten erzeugen, die zum einen eine Korrosion des Materials verhindern, aus dem die genannten Bauteile bestehen, zum anderen aber auch als haftvermittelnde Zwischenschicht fungieren können. Bevorzugt sind dünne keramische oder keramikähnliche Schichten auf Edelstählen, Refraktärmetallen und deren Legierungen. Dadurch werden eine Verdampfung des Metalls und eine unerwünschte Reaktivität des Metalls (Korrosion) bei hoher Temperatur verhindert oder zumindest stark vermindert. Außer der Funktion als Diffusionsbarriere und als Schutzschicht wird auch die Beschichtung der Oberflächen, insbesondere der Wände der Reaktionskammern, mit einem Katalysator erleichtert oder überhaupt erst ermöglicht. Derartige keramische Schichten können insbesondere Carbide, Nitride oder Oxide des Refraktärmetalls sein.

Solche Nitridierungen, Carbonisierungen und Carbonitridierungen werden bekanntlich zur Erzeugung von Diffusionsbarriereschichten und zur Härtung von Oberflächen eingesetzt. Besonders geeignet sind beispielsweise TiN und TiC und bevorzugt auch eine Mischung dieser beiden Materialien. In einer besonders bevorzugten Ausführungsform der Erfindung wird die keramische Schicht durch Hindurchleiten eines Beschichtungsgases durch die Reaktionskammern vorzugsweise bei entsprechend hoher Temperatur erzeugt. Dabei kann das Beschichtungsgas mit dem Substrat (als Reaktionspartner) reagieren, oder das Beschichtungsgas erzeugt die gewünschte Schicht durch kontrollierte thermische Zersetzung in einer geeigneten gasförmigen Vorstufe. Letzteres entspricht dem bekannten Verfahren der "chemical vapour deposition" (CVD).

Durch die indirekte Erwärmung des Reaktors sind solche Beschichtungsmethoden besonders einfach durchführbar. Dadurch wird der Herstellungsprozess für den Reaktor erheblich vereinfacht: Eine vorherige Beschichtungsoperation ist dann nicht erforderlich, und eine Nachbeschichtung ist jederzeit möglich, ohne dass der Reaktor zerlegt werden muss. Auch katalytisch aktive Edelmetalle können im CVD-Verfahren kontrolliert in den Kanälen aufgebracht werden.

Die Beschichtung der Kammern, insbesondere der Kanäle, in der Reaktionszone mit einem Trägerkatalysator kann auch in Analogie zur Herstellung von metallischen Autoabgaskatalysatoren geschehen. Dementsprechend kann die Beschichtung der Mikrokanäle mit Katalysatoren mittels so genannter "Washcoats" erfolgen. Ein Washcoat besteht beispielsweise aus einer Aufschlämmung eines Metalloxids, Hydroxids oder Oxid-Hydroxidgemischs in Wasser. Der Washcoat wird durch Sprühen oder Siebdruck oder ein anderes geeignetes Verfahren selektiv in die Kanäle eingebracht. Das Material des Washcoats ist bevorzugt Aluminiumoxid oder -hydroxid. Geeignet sind aber auch die Oxide aus der Gruppe der Seltenen Erdmetalle und zwar sowohl als Zusätze als auch als Washcoats selbst. Der aufgetrocknete, gegebenenfalls thermisch behandelte "kalzinierte" Washcoat bildet eine geeignete Grundlage für eine Beschichtung mit einem der oben oder der nachfolgend genannten katalytisch aktiven Metalle.

Bei den katalytisch aktiven Metallen handelt es sich in erster Linie um die Edelmetalle Pt, Pd, Rh, Re, Ru oder um Mischungen bzw. Legierungen dieser Metalle, aber auch um andere katalytisch aktive Metalle, die je nach Einsatzgebiet geeignet sind. Die Katalysatormetalle werden in der Regel in Form ihrer Salze in wässriger Lösung zur "Imprägnierung" des Washcoats verwendet. Anschließend werden die aufgebrachten Katalysatormaterialien zum aktiven metallischen Katalysator reduziert. Der Washcoat kann aber auch bereits das katalytische Metall in Form eines Salzes enthalten. Zur Erzeugung der katalytischen Aktivität kann das Metallsalz durch ein geeignetes Reduktionsverfahren, beispielsweise durch Erhitzen unter Wasserstoff (Formiergas) oder durch Reaktion mit anderen Reduktionsmitteln zum Metall reduziert werden, was durch die indirekte Beheizung des Reaktors auf einfache Weise möglich ist. Der eigentliche Katalysator besteht häufig aus verschiedenen Edelmetallen. Bei der HCN-Synthese nach dem Degussa-Verfahren besteht er bevorzugt aus einer Pt/Rh-Mischung, vorzugsweise Pt mit bis zu 10% Rh.

Da Katalysator und Washcoat thermisch sehr stark belastet sein können, werden Seltene Erdmetalle beispielsweise in Form ihrer Oxide, wie z.B. Ceroxid, Zirkondioxid usw., zur Erhöhung der thermischen Stabilität in die Schichten eingebaut.

Die Kanäle des Reaktors können entweder vor dem Zusammenbau bzw. Fügen des Reaktors (pre-coating) oder nachträglich (post-coating) beschichtet werden.

Alternativ kann der Katalysator auch in Form von kleinen Teilchen, etwa als Katalysatormetall- oder Katalysatorverbindungspartikel, oder aufgezogen auf kleinen Formkörpern oder als Gewebe in den Reaktorkammern enthalten sein. In einer weiteren Ausführungsform können der Reaktor oder die Reaktorkammerwände aus dem Katalysatormetall hergestellt sein.

Besonders günstig ist die induktive Erwärmung im Falle der Herstellung von Cyanwasserstoff (HCN). Weil nach dem erfindungsgemäßen Verfahren die Zufuhr hoher Energie möglich ist, kann nach dem an sich vorteilhaften, aber stark endothermen Degussa (BMA)-Verfahren gearbeitet werden, bei dem kein Wasser entsteht. Die Edukte sind Erdgas (hauptsächlich Methan) und Ammoniak. Die Umsetzung erfolgt nach der Reaktionsgleichung:

$$CH_4 + NH_3 \rightarrow HCN_{gas} + 3\ H_2 - 251{,}6\ kJ/mol$$

Bei der Reaktion werden demnach 251,6 kJ/mol verbraucht. Das Gasgemisch kann zusätzlich ein Inertgas enthalten, beispielsweise Stickstoff oder Argon. Wegen der geringen Reaktivität der Edukte muss das Reaktionsgemisch auf eine Temperatur von mindestens 1000°C erhitzt werden. Üblicherweise wird ein Platin-Katalysator verwendet, der 10 Gew.-% Rhodium enthält.

Da die Ausbeute bei der Reaktion durch Parallel- und Folgereaktionen stark absinkt - die Gleichgewichtskonzentration von HCN bei 1000°C liegt nach Literaturangaben bei 0% — soll das Reaktionsgemisch nur kurzzeitig auf die Reaktionstemperatur erhitzt werden und nach dem Passieren der Reaktionszone, in der die hohe Temperatur angewendet wird, möglichst schnell auf eine Temperatur von weniger als 400°C abgeschreckt werden. Die für die Reaktion erforderliche Zeit soll bevorzugt von 0,3 bis 2 ms betragen. Zur Abkühlung nach der Reaktion ist ein mikrostrukturierter Wärmeaustauscher vorgesehen, vorzugsweise ein Kreuzströmer, durch den das Produktgas nach dem Verlassen der Reaktionszone hindurchströmt. Zwischen Reaktorblock (Hochtemperaturzone) und dem Wärmeaustauscher (Abschreckzone) ist ein spezieller Übergangsbereich erforderlich, der möglichst schnell passiert werden muss. Nachdem die Reaktionsgase die Kanäle des Reaktorblocks verlassen haben, passieren sie dazu entweder einen sehr engen, kegelförmigen Spalt oder deutlich verengte Kanäle, so dass in der Übergangszone eine sehr hohe Strömungsgeschwindigkeit auftritt, die höher sein kann als die Schallgeschwindigkeit. Danach tritt das Produktgemisch in die erweiterten Kanäle des Wärmeaustauschers ein, wo es unter laminaren Strömungsbedingungen auf eine Temperatur von weniger als 400°C abgeschreckt wird.

Verschiedene Reaktorvarianten zur HCN-Synthese sind nach dem erfindungsgemäßen Prinzip herstellbar, von denen zwei beispielhaft beschrieben werden.

Bevorzugt sind induktiv erwärmte Reaktoren, insbesondere wegen der mit dieser Technik möglichen hohen Energieübertragung. So können mit den Reaktoren, wie im Demonstrationsreaktor (Beispiel 1) gezeigt ist, außerordentlich hohe Aufheizraten der Reaktanten in der Größenordnung von 500.000 K/sec erzielen:

Mit rotationssymmetrischen Reaktoren ist eine Auslegung des Heizungssystems besonders einfach, da ringförmige Induktionsspulen verwendet werden können und das induzierte Feld ebenfalls rotationssymmetrisch (axialsymmetrisch) ist.

Um eine möglichst gleichmäßige und effektive Erwärmung im Reaktorblock zu erreichen, kann dieser beispielsweise eine zylindrische Mantelfläche aufweisen und parallel zur Zylinderachse oder rotationssymmetrisch angeordnete Strömungskanäle als Reaktionskammern enthalten. Durch die Zylindersymmetrie werden auch Strahlungsverluste minimiert. Der Abstand aller Reaktorkanäle zu der Hochfrequenzspule ist zumindest annähernd gleich, wenn der Reaktorblock im Inneren der Hochfrequenzspule zentriert ist.

Da die Wärmezufuhr für stark endotherme Reaktionen erheblich sein kann, kann es zu einem Temperaturgradient von außen nach innen kommen, so dass die Reaktionskammern vorzugsweise in einem Bereich in der Nähe der Außenwand des Reaktorblocks angeordnet werden. Ein aus Titan hergestellter Reaktor nach diesem Konstruktionsprinzip ist in Beispiel 1 näher beschrieben.

Im Falle einer kontaktlosen Erwärmung eines rotationssymmetrischen Reaktors durch Strahlungswärme wird diese hauptsächlich in der Oberfläche des Reaktorblocks absorbiert. Von dort muss die Wärmeenergie durch Wärmeleitung nach innen transportiert werden. Bei dieser Konstruktion sind deshalb Wärmewiderstände innerhalb des Reaktorblockmaterials zu berücksichtigen.

Eine weitere Variante einer (annähernd) axialsymmetrischen Konstruktion ist ein mikrostrukturierter Rohrbündelreaktor (Beispiel 2). Hier sind metallische Rohre bzw. Kapillaren mit den für Mikrokanäle üblichen Abmessungen in einem zylinderförmigen Gehäuse ähnlich wie in einem klassischen Rohrbündelreaktor angeordnet. Ein flüssiges Wärmetransportmedium sorgt für den Wärmeaustausch. Sowohl das metallische Gehäuse als auch die Kapillaren werden induktiv erwärmt. Möglich ist auch die Verwendung eines elektronenleitenden, zumindest beim Betrieb flüssigen Wärmetransportmediums, das induktiv erwärmt wird. In diesem Falle kann der Mikrorohrbündelreaktor auch aus einem Isolator wie Glas, Quarzglas oder Keramik hergestellt werden.

Im näher beschriebenen Beispiel 1 (Demonstrationsreaktor) stehen der Mischer und der Wärmeaustauscher über kegelförmige Hohlräume mit der Reaktionskammer in Verbindung. Durch die bevorzugte Kegelform wird bei Verwendung einer Zylindergeometrie des Reaktorblocks eine schnelle und gleichmäßige Zuführung der Edukte und bei Verwendung entsprechender kegelförmiger Hohlräume auch eine Abführung der Produkte erreicht. Dabei ist darauf zu achten, dass die kegelförmigen Spalte der Übergangszonen, insbesondere im stromabwärts gelegenen Bereich so dimensioniert sind, dass die Strömungsgeschwindigkeit in den Spalten ausreichend groß ist. Das gilt insbesondere dann, wenn die bei hoher Temperatur gebildeten Reaktionsprodukte in einem nachgeschalteten Wärmeaustauscher schnell abgekühlt werden sollen, denn unter diesen Bedingungen können die Reaktionsprodukte schnellstmöglich in den nachgeschalteten Wärmeaustauscher überführt werden. Durch einen entsprechend gering gewählten Querschnitt des dem Reaktor nachgeschalteten Spaltes lässt sich in der Übergangszone zwischen Reaktor und Wärmeaustauscher eine hohe Strömungsgeschwindigkeit bis in den Überschallbereich erzielen, so dass die Verweilzeit in der Reaktionskammer stark verkürzt wird. Um die Wärmeableitung vom Reaktorblock zum Wärmeaustauscher durch den Kegel zu minimieren, ist er vorzugsweise hohl und aus einem Material geringer Wärmeleitfähigkeit gefertigt.

Die meisten mikrostrukturierten Reaktoren sind auf Grund ihres Aufbauprinzips plattenförmig. Das gilt insbesondere für Bauteile, bei denen die mikrostrukturierten Bleche unter Verwendung von Druckstempeln oder Pressen gefügt werden. Bei entsprechender Konstruktion und Anpassung der hierzu erforderlichen, rechteckigen Induktionsspulen lassen sich auch diese Reaktortypen für die Hochtemperatursynthese einsetzen.

Bevorzugt sind gefügte, vorzugsweise monolithische Reaktoren oder Module, die ohne Halte- oder Klammervorrichtungen auskommen. Der Vorteil dieses Konstruktionsprinzips besteht darin, dass sich das ganze Reaktorsystem, bestehend aus (heizbarer) Mischeinheit, Reaktor und Wärmeaustauscher (zum Abschrecken), auf einfachste Weise integrieren lassen, indem alle erforderlichen Funktionen auf jedem einzelnen mikrostrukturierten Blech, aus denen das System aufgebaut wird, realisiert wird. Naturgemäß ist auf diese Weise eine Vielzahl von Ausführungsformen möglich, sofern die Induktor- und Reaktorgeometrie so aufeinander abgestimmt sind, dass eine gleichförmige Erwärmung gewährleistet ist.

Ein derartiger Reaktor kann auch aus mehreren mikrostrukturierten, plattenförmigen Modulen oder Segmenten bestehen. Falls ein Ringquerschnitt für die Anordnung dieser Reaktoren erforderlich sein sollte, der in einem Innenbereich eines Induktors weitgehend auszufüllen ist, so können die Plattenmodule parallel zur Zylinderachse des Induktors angeordnet werden.

Hinsichtlich der Fertigungstechnik der Reaktormodule wird die Plattenform, d.h. ein rechteckiger Querschnitt bevorzugt. Die Abmessungen eines derartigen Reaktors werden so an die Frequenz des Induktors angepasst, dass eine ausreichende Eindringtiefe des Feldes des Induktors in den Reaktor gewährleistet ist und der Reaktor somit gleichmäßig erwärmt wird.

Zur näheren Erläuterung der Erfindung dienen die folgenden Figuren 1a - 1c, 1f, 2a und 2b. Die in den Figuren 1d, 1e, 3a - 4b dargestellten Reaktoren sind nicht Teil der Erfindung.

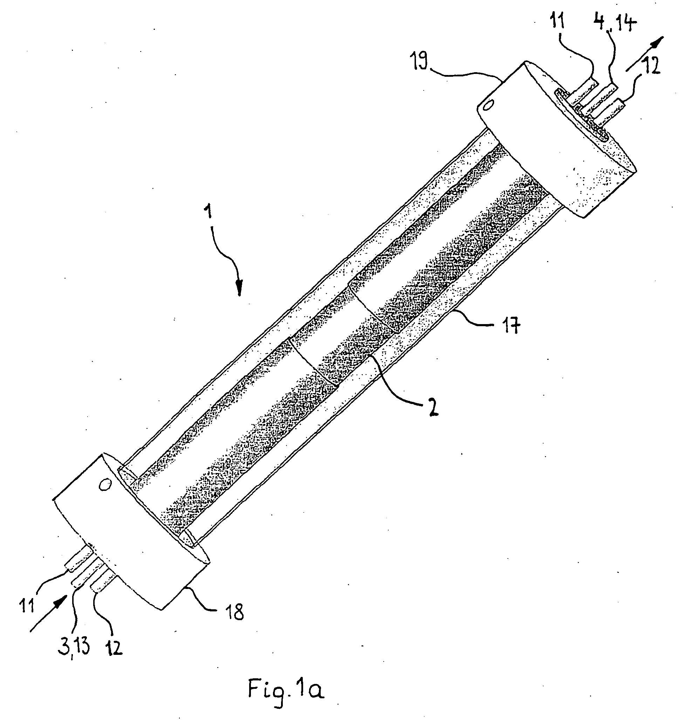

Fig. 1a: Gesamtansicht eines zylindrischen Reaktors;

Fig. 1 b: Perspektivische Darstellung im Längsschnitt durch den Reaktor von Fig.1a;

Fig. 1c: Perspektivische Darstellung des Reaktors von Fig. 1a mit dreidimensionaler Darstellung der innenliegenden Komponenten;

Fig. 1d: Längsschnitt durch den Reaktorblock des Reaktors von Fig. 1 a;

Fig. 1e: Perspektivische Gesamtansicht des Reaktorblocks des Reaktors von Fig. 1 a;

Fig. 1f: Schematische perspektivische Ansicht einer zylindrischen Reaktoranordnung mit Hochfrequenzspule;

Fig. 2a: Perspektivische Gesamtansicht eines mikrostrukturierten Rohrbündelreaktors;

Fig. 2b: Perspektivische Darstellung im Längsschnitt durch einen mikrostrukturierten Rohrbündelreaktor;

Fig. 3a: Perspektivische Darstellung eines plattenförmigen Reaktors;

Fig. 3b: Längsschnitt durch einen plattenförmigen Reaktor (Blech vom Typ A);

Fig. 3c: Längsschnitt durch einen plattenförmigen Reaktor (Blech vom Typ B);

Fig. 3d: Perspektivische Darstellung im Längsschnitt durch einen Reaktor sowie Detail daraus;

Fig. 4a: Perspektivische Darstellung im Schnitt eines rotationssymmetrischen plattenförmigen Hochtemperaturreaktors;

Fig. 4b: Perspektivische Darstellung im Schnitt eines rotationssymmetrischen plattenförmigen Hochtemperaturreaktors mit Wärmetransportmedium.

In den Figuren verwendete Bezugsziffern und -zeichen haben jeweils die gleichen Bedeutungen.

**Beispiel 1**

Rotationssymmetrischer Demonstrationsreaktor

In diesem Fall besteht der Reaktorblock aus einem Gleichrichtermetall, beispielsweise Titan. Titan ist bei hoher Temperatur an sich reaktiv und verdampft außerdem geringfügig, so dass sowohl die Reaktionskanäle als auch die Außenwände der Hochtemperaturzone passiviert werden müssen. Dazu wird der Reaktor passiviert, indem er einige Stunden lang bei 1000 bis 1200°C einem Ammoniakstrom ausgesetzt wird. Dabei nimmt er die für TiN typische goldene Farbe an. Die TiN-Schicht schützt das Metall gegen einen weiteren chemischen Angriff bei der hohen Temperatur. Möglicherweise katalysieren TiN und/oder gegebenenfalls auch TiC die HCN-Synthese bereits auch selbst, so dass es entbehrlich sein kann, zusätzlich andere Katalysatoren einzusetzen.

Der Demonstrationsreaktor aus Titan ist in Fig. 1a — 1f schematisch dargestellt.

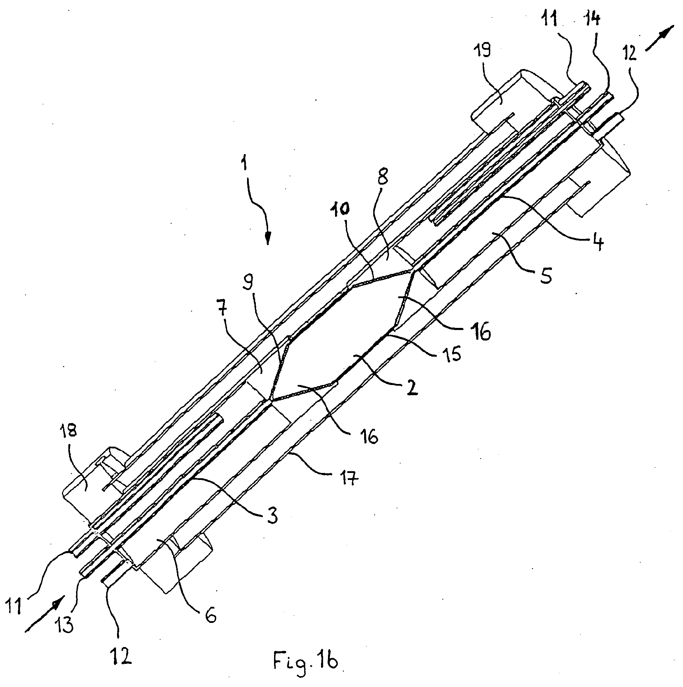

Fig. 1a zeigt eine Gesamtansicht des Reaktors 1. In Fig. 1b ist ein Längsschnitt durch den Reaktor 1 dargestellt. Diese besteht aus einem Reaktorblock 2, einer Zuführungsleitung 3 für Edukte, die auch als Mischstrecke dient, einer Auslassleitung 4 für Reaktionsprodukte und zwei Wärmeaustauschern 5, 6. Zwischen der Zuführungsleitung 3 und dem Reaktorblock 2 einerseits und zwischen dem Reaktorblock 2 und der Auslassleitung 4 andererseits befinden sich Übergangsstücke 7, 8 mit kegelförmigen Hohlräumen 9 bzw. 10, die die genannten Komponenten miteinander verbinden. Der Reaktorblock 2, die Zuführungsleitung 3, die Auslassleitung 4, die Wärmeaustauscher 5, 6 und die Übergangsstücke 7, 8 sind jeweils zylinderförmig und aus Titan gefertigt.

Sowohl die Zuführungsleitung (Mischstrecke) 3 als auch die Auslassleitung 4 werden durch die Wärmeaustauscher 5 bzw. 6 gekühlt. Hierzu sind an diesen Komponenten Kühlwassereinlauf- und -auslaufstutzen 11, 12 angeformt. Ferner ist an der Zuführungsleitung 3 ein Stutzen 13 für die Zuleitung von Edukten und an der Auslassleitung 4 ein entsprechender Stutzen 14 für die Ableitung der Reaktionsprodukte angeformt. Diese Stutzen 13, 14 der Leitungen 3, 4 sind aus Titan gefertigt.

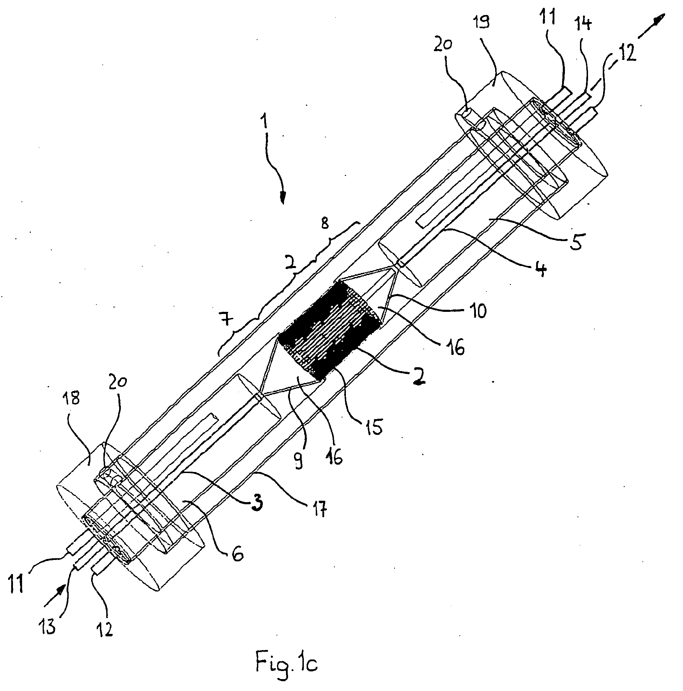

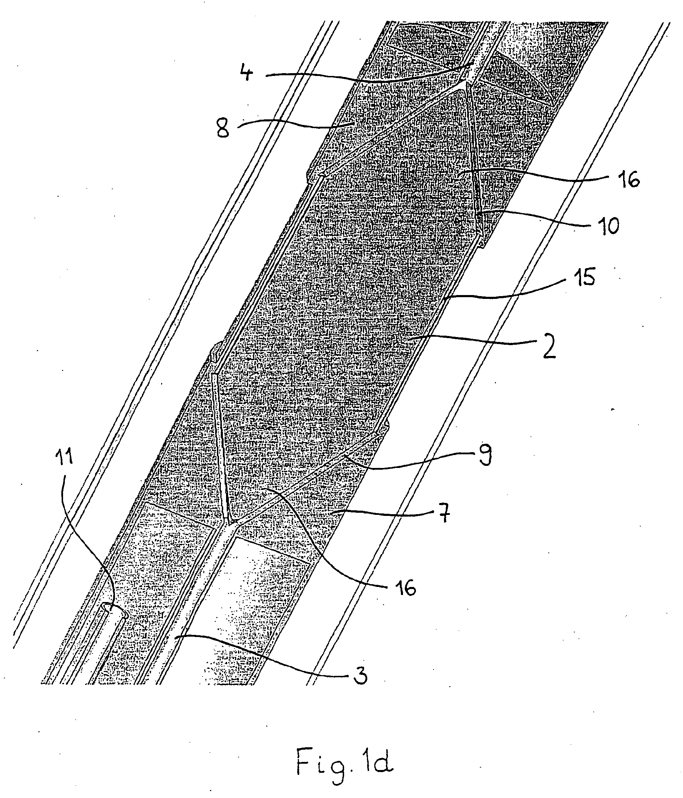

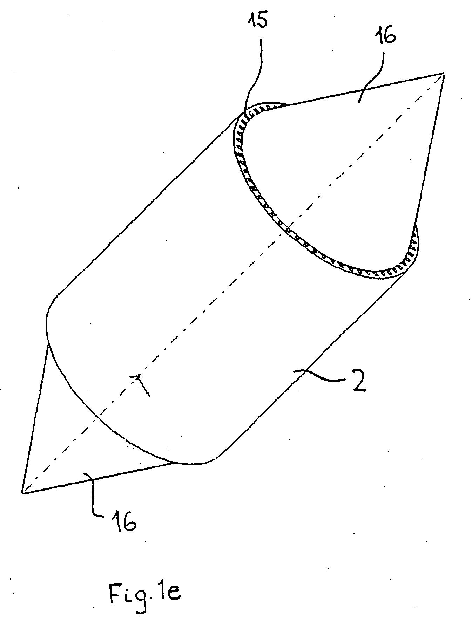

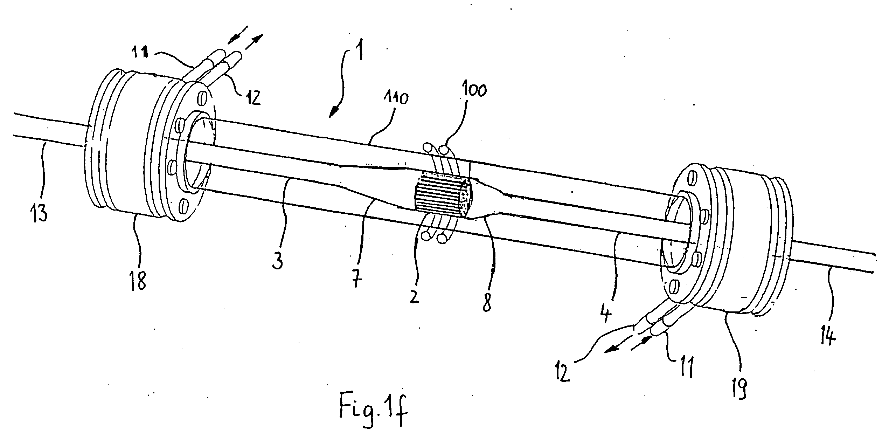

In Fig. 1c ist eine perspektivische Darstellung der Reaktoreinheit mit dem mikrostrukturierten Reaktorblock 2 dargestellt. Der Reaktor 1 besteht demnach wie in Fig. 1 b gezeigt aus einem Reaktorblock 2 (Kanäle schematisch gezeigt), Übergangsstücken 7, 8, einer Zuführungsleitung (Mischstrecke) 3, einer Auslassleitung 4 und den beiden Wärmeaustauschern 5, 6. Der Reaktor 1 ist in einem zylindrischen Gehäuse 17 untergebracht. Dieses Gehäuse 17 wird stirnseitig von Kühlwasser durchflossenen Halterungen 18, 19 gehalten. Jeweils einer der Kühlwasseranschlüsse 20 an diesen Halterungen 18, 19 ist ebenfalls gezeigt. Die Zuleitung 13 für die Edukte und die Ableitung 14 der Reaktionsprodukte reichen durch die Halterungen 18, 19 hindurch. Pfeile geben die Strömungsrichtung für die Edukte bzw. die Reaktionsprodukte an.

Im Bereich des Reaktorblocks 2 wird eine Hochfrequenzspule (nicht eingezeichnet) positioniert. Der Reaktorblock 2 ist axialsymmetrisch zur Induktionsspule angeordnet.

In Fig. 1d und Fig. 1e (nicht Teil der Erfindung) ist der Reaktorblock 2 separat im Detail dargestellt. Dieser ist zylindrisch geformt und weist lediglich nahe der zylindrischen Mantelfläche axialparallele Langlöcher 15 auf, die unmittelbar unterhalb der Mantelfläche angeordnet sind. Diese Löcher 15 werden dadurch gebildet, dass der Reaktorblock 2 aus zwei Teilen hergestellt wird: Zum einen wird ein zylindrisches Innenstück mit einem Durchmesser produziert, der dem radialen Abstand der Langlöcher 15 im Reaktorblock 2 entspricht. In die Mantelfläche dieses Innenstücks werden axialparallele Nuten eingefräst. Diese Nuten haben im dem Zentrum des Blocks 2 zugewandten Bereich einen halbkreisförmigen Querschnitt. Zum anderen wird ein Rohrstück hergestellt, dessen Innendurchmesser exakt dem Außendurchmesser des Innenstücks entspricht. Durch Einpressen des Innenstücks in das Außenstück wird der Reaktorblock 2 mit Langlöchern 15 produziert.

Die Übergangsstücke 7, 8 bilden kegelförmige Hohlräume 9 bzw. 10. Diese Hohlräume 9, 10 verbinden die Zuführungsleitung 3 bzw. die Auslassleitung 4 mit den Langlöchern 15 im Reaktorblock. Um eine effiziente Strömungsführung im Reaktorblock zu gewährleisten, sind am zylindrischen Innenstück des Reaktorblocks 2 kegelförmige Anschlusskörper 16 angesetzt, bzw. angeschraubt.

In Fig. 1f ist der Mikroreaktor 1 in der erfindungsgemäßen Mikroreaktoranordnung mit einer Hochfrequenzspule zur kontaktlosen Beheizung gezeigt. Der Mikroreaktor 1 besteht demnach wie in den Fig. 1a — 1 e dargestellt aus einem Reaktorblock 2 (Kanäle schematisch gezeigt), Übergangsstücken 7, 8, einer Zuführungsleitung 3 und einer Auslassleitung 4. Der Mikroreaktor ist in einem zylindrischen Gehäuse 110 untergebracht. Dieses Gehäuse 110 wird stirnseitig von Kühlwasser durchflossenen Halterungen 18, 19 gehalten. Die Kühlwasseranschlüsse 11, 12 an diesen Halterungen 18, 19 sind ebenfalls gezeigt. Die Zuleitung für die Edukte findet über den Stutzen 13 und deren Ableitung über den Stutzen 14 statt. Die Pfeile geben jeweils die Strömungsrichtung an. Im Bereich des Reaktorblocks 2 ist eine Hochfrequenzspule 100 geschnitten gezeigt. Diese Spule umgibt das Gehäuse 110 und mit diesem auch den Reaktorblock 2. Letzterer ist in der Spule 100 axialsymmetrisch angeordnet. Durch die Spule 100 wird ein Hochfrequenzfeld erzeugt, das seinerseits Wirbelströme in dem Reaktorblock 2 generiert.

Zum Design von Strömungskanälen in dem in den Fig. 1a — 1f dargestellten Reaktorsystem, in dem die HCN-Synthese durchgeführt werden sollte, wurden die in Tabelle 1 angegebenen Kenngrößen eines Demonstrationsreaktors aus Titan zu den Betriebsbedingungen und zur Reaktorauslegung exemplarisch zugrunde gelegt:

| | |
|---|---|
| Betriebstemperatur: | 1000 bis 1400°C |
| Betriebsdruck: | 1,0 bis 2,0 bar |
| Temperatur der zugeführten Gase: | 25°C |
| Mittlere Verweilzeit | 0,3 bis 3 ms |

(fortgesetzt)

| Länge des Strömungskanals im Reaktor: | 27 mm |
|---|---|
| Breite der Strömungskanäle: | 0,6 mm |
| Radius der Strömungskanäle am Boden: | 0,3 mm |
| Anzahl der Kanäle: | 64 |

Aus der Kanalbreite, -tiefe und dem Kanalradius ergab sich ein Kanalquerschnitt von 0,32 mm$^2$. Unter Berücksichtigung der Kanallänge ergab sich ein Kanalvolumen von 8,68 mm$^3$, und unter Berücksichtigung der Anzahl der Kanäle ergab sich ein Gesamtvolumen der Kanäle von 5,55·10$^{-7}$ m$^3$. Bei einer mittleren Verweilzeit der Edukte von 1 ms ergab sich eine Gasgeschwindigkeit bei 1000°C am Kanaleingang von ca. 18 m/s und am Kanalausgang von ca. 36 m/s. Die daraus errechnete Reynoldszahl Re betrug zwischen 102 und 108. Daher war die Strömung in den Strömungskanälen laminar.

Bei einer Einleitung von $CH_4$ und $NH_3$ über die Zuleitung 13 in den Reaktor bildeten sich HCN und $H_2$. Diese Reaktionsprodukte wurden über die Ableitung 14 aus dem Reaktor und dem Reaktorsystem herausgeführt und in Kaliumhydroxidlösung absorbiert. Das Produktgemisch wurde nach üblichen Methoden, vor allem massenspektroskopisch und anhand des Cyanidgehalts der Absorptionslösung analysiert.

Bereits ab einer Temperatur von 980°C ließ sich die Bildung von HCN massenspektroskopisch nachweisen. Sie stieg steil an bis in den Bereich von etwa 1150°C. Die höchste HCN-Ausbeute lag unter diesen Bedingungen über 50%. Somit wurden maximal ca. 2g HCN in der Minute gebildet. Höhere Temperaturen führten auf Grund der steigenden Ammoniakzersetzung nicht zu höheren HCN-Ausbeuten.

Beispiel 2

Mikrostrukturierter Rohrbündelreaktor

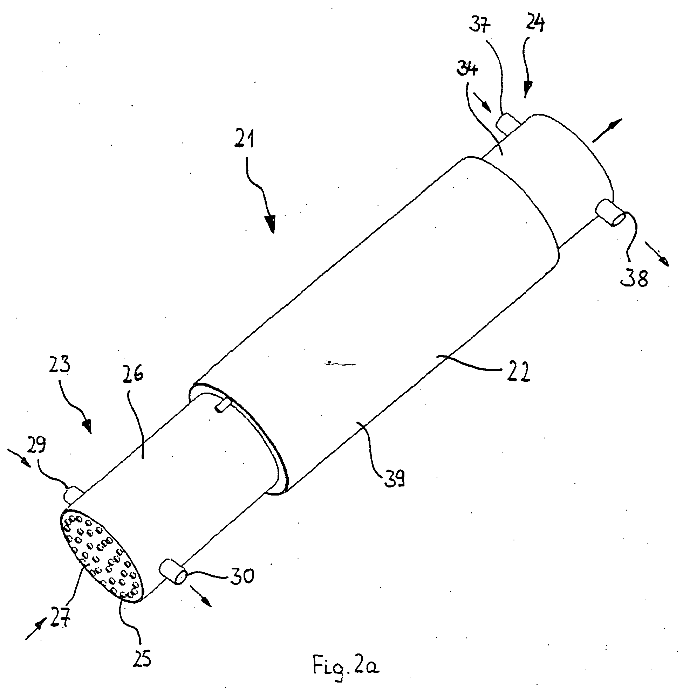

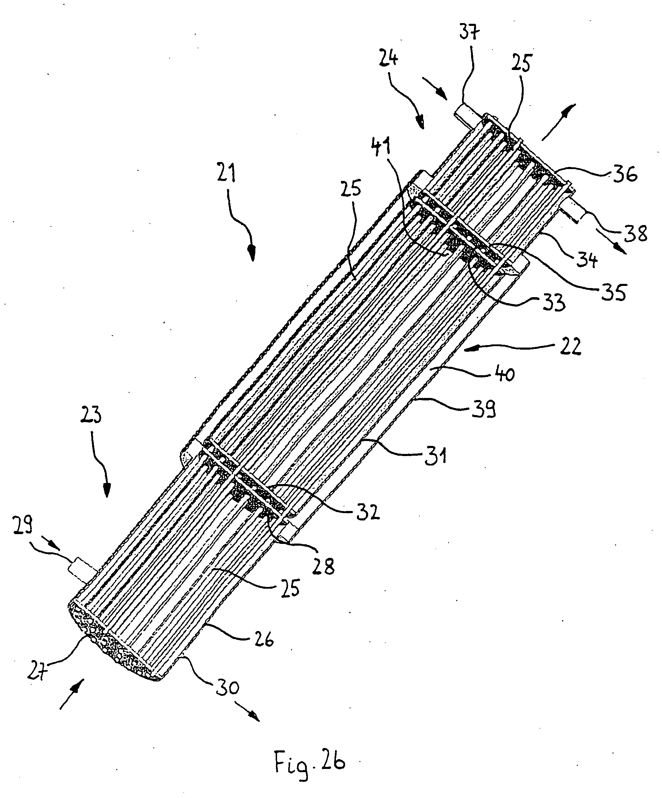

Der Reaktor kann auch als mikrostrukturierter Rohrbündelreaktor ausgeführt sein. Fig. 2a zeigt eine Gesamtansicht des mikrostrukturierten Rohrbündelreaktors 21. In Fig: 2b ist ein Längsschnitt durch den Rohrbündelreaktor 21 dargestellt. Dieser besteht aus einem Reaktorblock 22 und zwei Wärmeaustauschern 23, 24. Der gesamte mikrostrukturierte Rohrbündelreaktor 21 wird durch eine Vielzahl von einzelnen Rohren 25 durchzogen. Die einzelnen Rohre 25 durchlaufen den Wärmeaustauscher 23, den Reaktorblock 22 und den Wärmeaustauscher 24. Die Rohre 25 werden durch die Wärmeaustauscher 23, 24 gekühlt. Der Wärmeaustauscher 23 wird durch ein zylindrisches Rohr 26 und aus zwei Endblechen 27, 28, die passgenaue Löcher für die Rohre 25 aufweisen, gebildet. Am zylindrischen Rohr 26 sind Kühlwassereinlauf-und -auslaufstutzen 29, 30 angeformt, wobei die Flussrichtung des Kühlwassers durch Pfeile angedeutet ist.

Der Reaktorblock 22 wird durch ein zylindrisches Rohr 31 und aus zwei Endblechen 32, 33, die passgenaue Löcher für die Rohre 25 aufweisen, gebildet. Der durch das zylindrische Rohr 31 und die Endbleche 32, 33 gebildete Hohlraum 41 ist vorzugsweise mit einem Wärmetransportmedium gefüllt.

Der Wärmeaustauscher 24 wird durch ein zylindrisches Rohr 34 und aus zwei Endblechen 35, 36, die passgenaue Löcher für die Rohre 25 aufweisen, gebildet. Am zylindrischen Rohr 34 sind Kühlwassereinlauf- und -auslaufstutzen 37, 38 angeformt, wobei die Flussrichtung des Kühlwassers durch Pfeile angedeutet ist.

Die genannten Komponenten, nämlich der mikrostrukturierte Reaktorblock 22, die Wärmeaustauscher 23, 24 und die einzelnen Rohre 25, sind, insbesondere bei der Anwendung zur HCN-Synthese, vorzugsweise aus Titan gefertigt.

Der Reaktorblock 22 ist von einem zylindrischen Rohr 39, welches vorzugsweise aus Quarzglas besteht, umgeben. Ein Hohlraum 40 ist zwischen den zylindrischen Rohren 39, 31 und den Endplatten 28, 32 bzw. 33, 35 gebildet und kann gegebenenfalls evakuiert werden.

Die Edukte werden den einzelnen Rohren 25 vor dem Eintritt in den Wärmeaustauscher 23 zugeführt, wobei die Wegstrecke in den Rohren 25 im Wärmeaustauscher 23 als Vorwärm- und Mischstrecke für die Edukte dienen kann. Die Edukte können mittels bekannter Komponenten zugeführt und gemischt werden (nicht dargestellt). Die Reaktionsprodukte werden nach dem Verlassen des Wärmeaustauschers 24 durch die Rohre 25 abgeleitet. Die Pfeile geben die Strömungsrichtung für die Edukte bzw. die Produkte an.

Im mittleren Bereich des Reaktorblocks 22 ist eine Hochfrequenzspule (nicht dargestellt) angeordnet. Insbesondere für die HCN-Synthese ist der Reaktor vor der Inbetriebnahme wie in Beispiel 1 beschrieben mit Ammoniak zu passivieren.

## Beispiel 3

Plattenförmiger Reaktor aus einem Refraktärmetall (nicht Teil der Erfindung)

Der plattenförmige Reaktor besteht aus einem Mischer (optional), einem Wärmeaustauscher zum Vorheizen, dem eigentlichen Hochtemperatur-Reaktorblock und dem Wärmeaustauscher zum Abschrecken des Reaktionsgases.

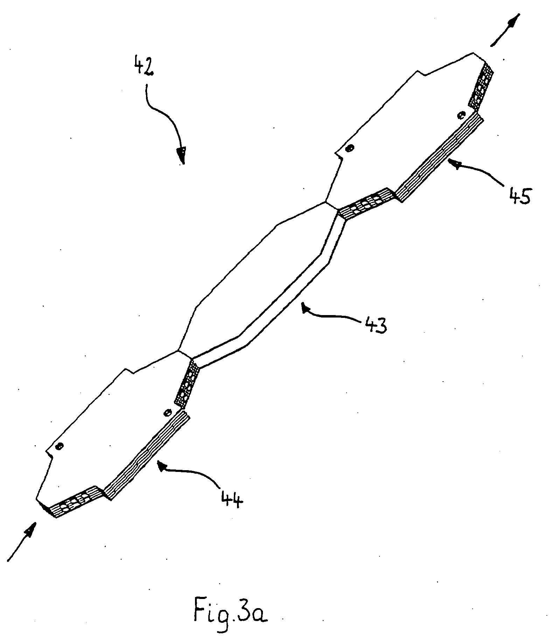

Fig. 3a zeigt eine Gesamtansicht des plattenförmigen Reaktors 42. Dieser besteht aus einem plattenförmigen Reaktorblock 43 und zwei plattenförmigen Wärmeaustauschern 44, 45, die als Kreuzströmer ausgeführt sind. Die genannten Komponenten, nämlich der plattenförmige Reaktorblock 43 und die plattenförmigen Wärmeaustauscher 44, 45, bestehen aus zwei Typen von mikrostrukturierten Blechen A und B, die alternierend gestapelt sind.

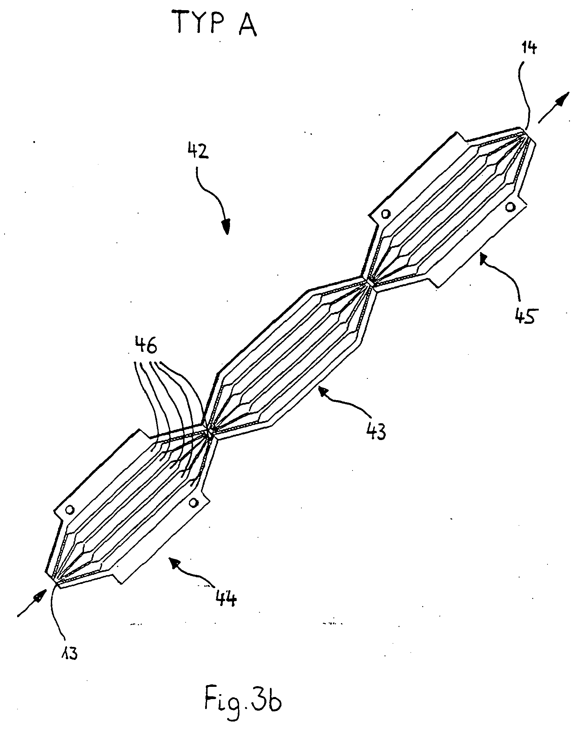

Fig. 3b zeigt ein Blech von Typ A mit durchgehenden Reaktionskanälen 46. Die Edukte werden durch einen Einlass 13 zugeführt.

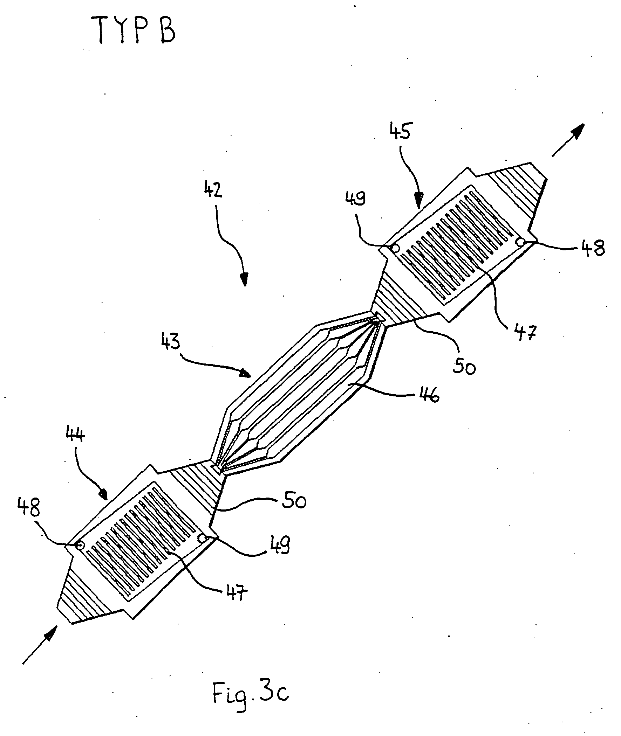

Fig. 3c zeigt ein Blech vom Typ B. Im Bereich der Wärmeaustauscher 44, 45 sind die Kanäle 47 für ein flüssiges Wärmetransportmedium sowie der Zulauf 48 und der Ablauf 49 gezeigt. Zur Minimierung eines Wärmetransportes zwischen dem Reaktorblock 43 und den Wärmeaustauschern 44, 45 sind offene Kanäle 50 vorgesehen.

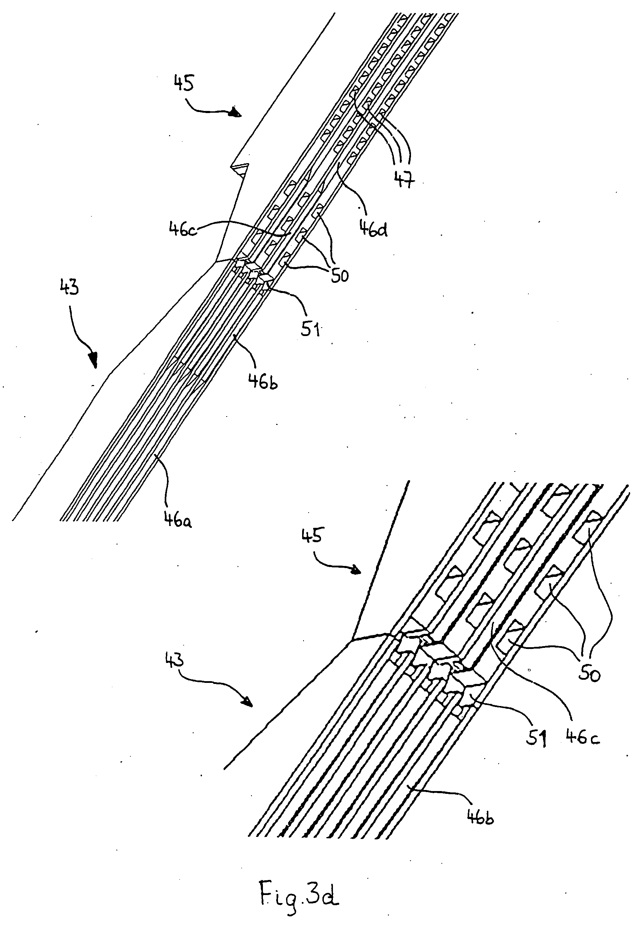

Die Funktionsweise des Reaktorsystems wird in einer Querschnittsdarstellung, die in Fig. 3d gezeigt ist, ersichtlich. In einer vergrößerten Detaildarstellung ist die Übergangszone zwischen dem Reaktorblock 43 und dem stromabwärts gelegenen Kreuzstrom-Wärmeaustauscher 45 zum Abschrecken der Produktgase abgebildet. Die in den Reaktionskanälen 46a im Reaktorblock 43 gebildeten Produkte passieren verengte Kanäle 46b in einer Übergangszone, vereinigen sich in einer Kammer 51 und durchströmen dann eine Zone der offenen Kühlkanäle 50, in der sich anschließende Reaktionskanäle 46c immer noch verengt sind. Danach erreichen die Kanäle den Kreuzstrom-Wärmeaustauscher 45, der Kühlmittelkanäle 47 enthält. In diesem Bereich befinden sich erweiterte Reaktionskanäle 46d.

Die Funktionsweise des Reaktors lässt sich somit wie folgt beschreiben: Die gemischten Eduktgase strömen in den Kreuzstrom-Wärmeaustauscher 44 ein und werden durch das in den Kanälen 46 fließende Wärmetransportfluid erwärmt. Im Endbereich des Wärmeaustauschers 44 verengen sich die Kanäle 46. Dadurch steigt die Strömungsgeschwindigkeit in dem Bereich stark an, indem sich die offenen Kühlkanäle 50 befinden. Nach dem Passieren einer Kammer, die wie die Kammer 51 zwischen dem Wärmeaustauscher 44 und dem Reaktorblock 43 angeordnet ist, erreichen die vorerwärmten Eduktgase die erweiterten Kanäle 46 des Hochtemperatur-Reaktorblocks 43. Die Produktgase passieren danach in umgekehrter Reihenfolge eine durch die verengten Kanäle 46b gebildete Beschleunigungszone, passieren dann die Kammer 51 und den Bereich, in dem sich die offenen Kühlkanäle 50 befinden, und werden schließlich im Wärmeaustauscher 45 abgeschreckt bzw. gekühlt. Die verengten Kanäle 46b der Beschleunigungszone sorgen dafür, dass sich das Wärmetransportfluid nur während sehr kurzer Verweilzeiten zwischen den verschiedenen Temperaturzonen befindet. Die offenen Kühlkanäle 50 sollen die Wärmeableitung zwischen dem heißen Reaktorblock 43 und den Wärmeaustauschern 44, 45 minimieren. Befindet sich der Reaktor im Vakuum, so sind diese Kühlkanäle 50 naturgemäß ebenso evakuiert.

Eine Hochfrequenzspule (nicht darstellt) befindet sich im mittleren Bereich des Reaktorblockes 43. Diese Induktionsspule ist in diesem Falle entsprechend dem Reaktorquerschnitt rechteckig geformt. Der Reaktor und die Induktionsspulen befinden sich vorzugsweise in einem evakuierbaren Gehäuse. Vakuumdichtungen dieses Gehäuses befinden sich bevorzugt nicht an heißen Teilen.

Es ist auch möglich, den Wärmeaustauscher 44 durch eine induktiv beheizte Einheit, beispielsweise durch einen induktiv beheizten Mischer, der mikrostrukturiert sein kann, zu ersetzen.

Titanreaktoren werden bevorzugt durch Diffusionsschweißen zusammengebaut, während Reaktoren aus hochlegierten Stählen oder eisenhaltigen Legierungen durch Diffusionsbonden oder bevorzugt durch Diffusionslöten gefügt werden. Im letzteren Falle werden auf den Fügestellen entsprechende galvanische Schichten aus $NiP_x$ oder $NiB_x$ in einer Schichtdicke von ca. 0,3 bis 3 $\mu$m auf den entsprechenden Stählen oder Legierungen, aus denen die Reaktorbestandteile bestehen, vorzugsweise vor dem Aufbringen eines Katalysators abgeschieden. Die Legierungen können beispielsweise aus Kobalt-, Chrom- oder Eisenlegierungen, beispielsweise Nicrofer, oder besser aus speziellen hochwärmefesten Legierungen wie beispielsweise Fe-20-Cr-5Al-0,05Ti-0,08REM (REM = Seltenes Erdmetall) (K.Ohmura et al., Proceedings of International Conference on Stainless Steels, 1991, ISIJ, 1212), bestehen. Die Reaktoren können aus den gestapelten, mikrostrukturierten Blechen und den übrigen Komponenten insbesondere bei ca. 800°C im Vakuum unter einem Druck von ca. 10 MPa zusammengebaut werden.

In der folgenden Tabelle 2 sind Daten und Betriebsbedingungen eines Reaktors angegeben:

| | |
|---|---|
| Abmessungen Reaktorblock | 30 x (15 - 30) x 1.7 cm$^3$ d.h. ca. 0,75 bis 1,51 Innenvolumen: ca. 130 bis 260 ml |
| Reaktionszeit | 1 - 2 ms |
| Strömungsgeschwindigkeit | ca. 100 m/s (Eingang), ca. 150 m/s (Ausgang) |

(fortgesetzt)

| Betriebstemperatur | 1000 - 1150°C |
|---|---|
| Reynoldszahl (grob geschätzt) | ca. 100 |
| Strömungsform | laminare Pfropfströmung |
| Leistung Induktor | 650 kW |
| Leistung effektiv | 400 kW |
| Kanalvolumen | ca. 0,4 ml |
| Kanalzahl | 640 |
| Lagenzahl / Kanäle je Lage | 16 /40 |
| Produktivität theoretisch | 118 kg HCN/h oder ca. 950 t/a |

Die Abmessungen des Reaktorblockes berücksichtigen zum einen die fertigungstechnischen Voraussetzungen, d.h. die Notwendigkeit einer kostengünstigen Strukturierung der Kanalbleche und die Fügetechnik, und zum anderen die abgeschätzten Reaktionsbedingungen.

**Beispiel 4**

Rotationssymmetrischer plattenförmiger Reaktor (nicht Teil der Erfindung)

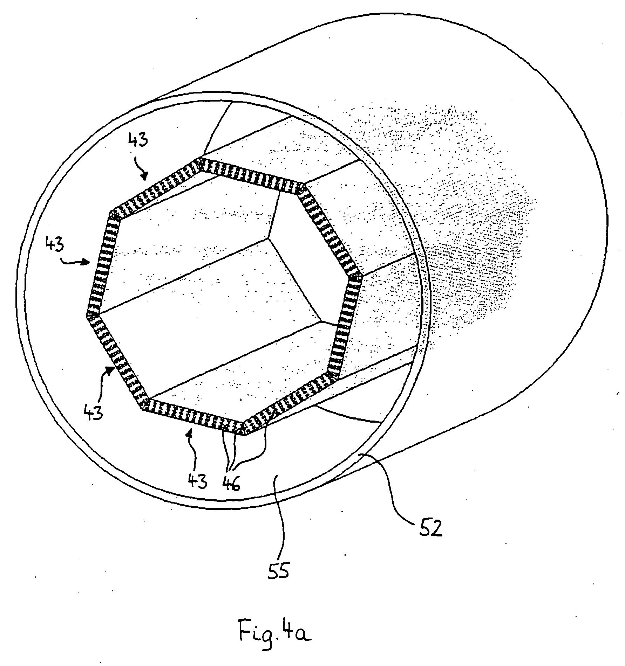

Fig. 4a stellt eine weitere Ausführungsform eines Reaktorsystems dar. Um einen möglichst hohen Gesamtdurchsatz zu erreichen, sind mehrere plattenförmige Reaktorblöcke 43 parallel geschaltet. Die Reaktorblöcke 43 sind axialsymmetrisch zueinander angeordnet und bilden zusammen genommen etwa eine Mantelfläche eines Zylinders. Die Reaktorblöcke 43 bilden einen achteckigen monolithischen Körper: In den Reaktorblöcken 43 befinden sich Strömungskanäle 46, die im vorliegenden Fall in parallel zu den jeweiligen Oberflächen der einzelnen Blöcke 43 angeordneten Kanalebenen verlaufen. Dies ist schematisch dargestellt. Selbstverständlich wäre es auch möglich, die Blöcke so auszuführen, dass sie im Innenbereich keinen Hohlraum aufweisen. Jedoch wäre es nachteilig, die Strömungskanäle auch in diesem Innenbereich vorzusehen, da zu erwarten ist, dass sich ein Temperaturgradient zu diesem Innenbereich hinein ausbildet. Die Gesamtanordnung von Reaktorblöcken 43 befindet sich in einem zylindrischen Rohr 52, welches vorzugsweise aus Quarzglas gefertigt ist. Der Hohlraum 55 innerhalb des zylindrischen Rohres 52 kann gegebenenfalls evakuiert werden. Diese Anordnung von Reaktorblöcken 43 befindet sich in einer Hochfrequenzspule (nicht darstellt), die über ein Hochfrequenzfeld Wirbelströme in den Reaktorblöcken 43 induziert, so dass sich diese aufheizen. Dabei kann die Induktionsspule sowohl außerhalb als auch im Innenraum 55 angeordnet werden.

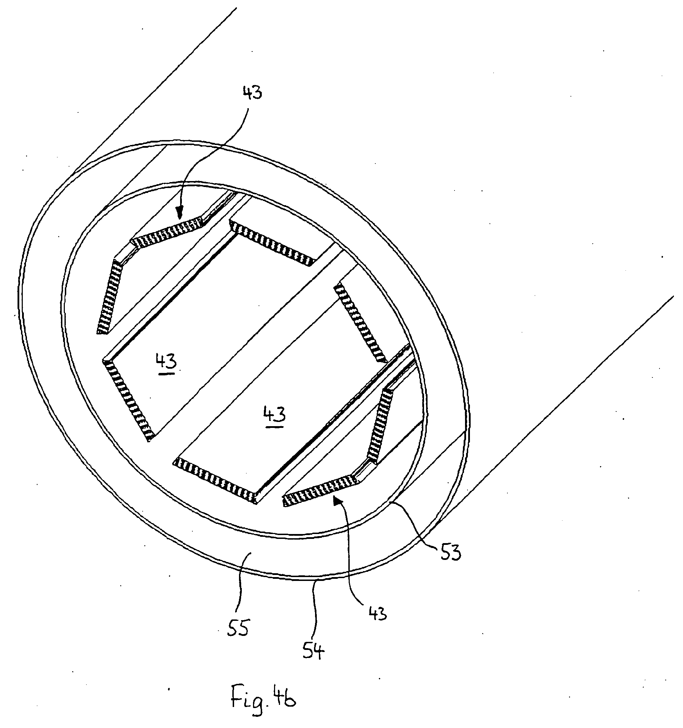

In Fig. 4b ist noch eine weitere Ausführungsform der vorliegenden Reaktoranordnung schematisch wiedergegeben. Auch diese Ausführungsform dient dazu, einen möglichst großen Gesamtdurchsatz zu erreichen. In dieser Ausführungsform berühren sich die einzelnen Reaktorblöcke 43 nicht. Der Bereich zwischen den Reaktorblöcken 43 ist vorzugsweise mit einem Wärmetransportmedium gefüllt. Die Gesamtanordnung der plattenförmigen Reaktorblöcke 43 wird wahlweise von zwei zylindrischen Rohren 53, 54 umgeben. Die zylindrischen Rohre 53 und 54 sind vorzugsweise aus Quarzglas gefertigt. Ein Hohlraum 55 zwischen den beiden Rohren 53, 54 kann gegebenenfalls mit Wasser gekühlt werden. Der von dem Rohr 53 umfasste Raum kann mit dem Wärmetransportmedium gefüllt sein. Das Rohr 54 ist von einer Hochfrequenzspule umgeben (nicht dargestellt). Eine zusätzliche Induktionsspule kann innen angebracht werden.

Als Energiequelle für die Induktionsspule wird ein Halbleiter-(Festkörper)-Mittelfrequenzgenerator bevorzugt, so dass sich ohne Probleme Temperaturen von über 1200°C erzielen lassen.

Bezugszeichenliste:

| 1 | mikrostrukturierter Reaktor |
|---|---|
| 2 | Reaktorblock |
| 3 | Zuführungsleitung am mikrostrukturierten Mischer 6 |
| 4 | Auslassleitung am mikrostrukturierten Wärmeaustauscher 5 |
| 5 | mikrostrukturierter Wärmeaustauscher |
| 6 | mikrostrukturierter Mischer, Wärmeaustauscher |

| 7,8 | Übergangsstück |
| 9, 10 | Hohlraum |
| 11 | Kühlwassereinlaufstutzen |
| 12 | Kühlwasserauslaufstutzen |
| 13 | Stutzen für die Zuleitung von Edukten / Reaktanten |
| 14 | Stutzen für die Ableitung von Reaktionsprodukten |
| 15 | Reaktionskammer, Langlöcher |
| 16 | Anschlusskörper am Reaktorblock 2 |
| 17 | Gehäuse |
| 18, 19 | Gehäusehalterung |
| 20 | Kühlwasseranschluss |
| 21 | Rohrbündelreaktor |
| 22 | Reaktorblock |
| 23,24 | Wärmeaustauscher |
| 25 | Rohre im Rohrbündelreaktor 21 |
| 26 | zylindrisches Rohr des Wärmeaustauschers 23 |
| 27, 28 | Endbleche des Wärmeaustauschers 23 |
| 29 | Kühlwassereinlaufstutzen |
| 30 | Kühlwasserauslaufstutzen |
| 31 | zylindrisches Rohr des Reaktorblockes 22 |
| 32, 33 | Endbleche des Reaktorblockes 22 |
| 34 | zylindrisches Rohr des Wärmeaustauschers 24 |
| 35, 36 | Endbleche des Wärmeaustauscher 24 |
| 37 | Kühlwassereinlaufstutzen |
| 38 | Kühlwasserauslaufstutzen |
| 39 | zylindrisches Rohr; vorzugsweise aus Quarzglas |
| 40 | evakuierbarer Hohlraum' im Bereich des Reaktorblockes 22 |
| 41 | Hohlraum im Reaktorblock 22 |
| 42 | plattenförmiger Reaktor |
| 43 | plattenförmiger Reaktorblock |
| 44, 45 | plattenförmige Wärmeaustauscher |
| 46 | Reaktionskanäle |
| 46a | Reaktionskanäle im Reaktorblock 43 |
| 46b | verengte Kanäle in einer Übergangszone |
| 46c | verengte Reaktionskanäle in einer Übergangszone |
| 46d | erweiterte Reaktionskanäle im Wärmeaustauscher 45 |
| 47 | Kühlkanäle im Wärmeaustauscher 45 |
| 50 | offene Kühlkanäle |
| 51 | Kammer in einer Übergangszone |
| 52 | zylindrisches Rohr, vorzugsweise aus Quarzglas |
| 53, 54 | zylindrisches Rohr, vorzugsweise aus Quarzglas |
| 55 | Hohlraum im Rohr 52, 54 |
| 100 | Hochfrequenzspule |
| 110 | Gehäuse |

**Patentansprüche**

1. Reaktorsystem mit einem eine Reaktionszone zur Durchführung einer chemischen Reaktion aufweisenden mikrostrukturierten Reaktor, wobei die Reaktionszone durch einen Reaktorblock (22) gebildet ist, der einen Einlassbereich für die Zuführung von Reaktionsedukten und einen Auslassbereich zur Abfuhr von Reaktionsprodukten aufweist und mittels einer Induktionsheizung (100) aufgeheizt wird, **dadurch gekennzeichnet, dass** der Reaktorblock ein Reaktorblock (22) eines mikrostrukturierten Rohrbündelreaktors (21) ist, wobei der Reaktorblock (22) eine Vielzahl einzelner Rohre (25) aufweist und deren Strömungskanäle Reaktionskammern (15) ausbilden.

2. Reaktorsystem nach Anspruch 1, **dadurch gekennzeichnet, dass** die Induktionsheizung (100) einen Generator aufweist, der ein Festkörpergenerator ist.

3. Reaktorsystem nach Anspruch 1 oder 2, **dadurch gekennzeichnet, dass** der Reaktorblock (22) aus einem Refraktärmetall besteht oder seine Oberflächen mit einer Schicht aus einem Refraktärmetall überzogen sind.

4. Reaktorsystem nach einem der vorstehenden Ansprüche, **dadurch gekennzeichnet, dass** die Wände der Reaktionskammern (15) mit einer keramischen Schicht überzogen sind.

5. Reaktorsystem nach Anspruch 4, **dadurch gekennzeichnet, dass** die keramische Schicht durch Hindurchleiten eines Beschichtungsgases durch die Reaktionskammern (15) gebildet wird.

6. Reaktorsystem nach einem der vorstehenden Ansprüche, **dadurch gekennzeichnet, dass** die Wände der Reaktionskammern (15) mit einem Katalysator überzogen sind.

7. Reaktorsystem nach einem der vorstehenden Ansprüche, **dadurch gekennzeichnet, dass** der Reaktorblock (22) eine zylindrische Mantelfläche (31) aufweist und dass sich die Rohre (25) im Wesentlichen axial erstrecken und parallel zueinander angeordnet sind.

8. Reaktorsystem nach einem der vorstehenden Ansprüche, **dadurch gekennzeichnet, dass** der mikrostrukturierte Reaktor mindestens eine Mischzone zur Vermischung von Reaktionsedukten der chemischen Reaktion aufweist.

9. Reaktorsystem nach einem der vorstehenden Ansprüche, **dadurch gekennzeichnet, dass** der mikrostrukturierte Reaktor einen zum schnellen Abkühlen von den Reaktorblock (22) verlassenden Reaktionsprodukten der chemischen Reaktion dienenden mikrostrukturierten Wärmetauscher (24) aufweist.

10. Reaktorsystem nach einem der vorstehenden Ansprüche, **dadurch gekennzeichnet, dass** der mikrostrukturierte Reaktor vor der Reaktionszone einen Wärmetauscher (23) aufweist.

11. Reaktorsystem nach einem der Ansprüche 9 oder 10, **dadurch gekennzeichnet, dass** die Rohre (25) die Reaktionszone und den Wärmetauscher (23, 24) durchlaufen.

12. Reaktorsystem nach Anspruch 11, **dadurch gekennzeichnet, dass** die Wegstrecke in den Rohren (25) im Wärmetauscher (23) als Vorwärmstrecke für die Reaktionsedukte ausgebildet ist.

13. Verfahren zur Durchführung einer chemischen Reaktion in einem eine Reaktionszone aufweisenden mikrostrukturierten Reaktor, umfassend:

    a. Aufheizen der Reaktionszone durch die Induktionsheizung
    b. Zuführen von Reaktionsedukten zur Reaktionszone und
    c. Abführen entstandener Reaktionsprodukte aus der Reaktionszone,

**dadurch gekennzeichnet, dass** die chemische Reaktion in einem mikrostrukturierten Rohrbündelreaktor (21) gemäß einem der Ansprüche 1 bis 12 durchgeführt wird.

14. Verfahren nach Anspruch 13, **dadurch gekennzeichnet, dass** die Reaktionsprodukte in einer sich unmittelbar an die Reaktionszone anschließenden Kühlzone abgeschreckt werden.

15. Verfahren nach Anspruch 14, **dadurch gekennzeichnet, dass** das Gemisch der Reaktanten mit einer so hohen linearen Geschwindigkeit durch die Reaktionszone und von dort zu einer sich unmittelbar an die Reaktionszone anschließenden Kühlzone transportiert wird, dass die Durchlaufdauer durch die Reaktionszone bis zur Kühlzone weniger als 10 ms beträgt.

**Claims**

1. A reactor system with a microstructured reactor including a reaction zone for carrying out a chemical reaction, wherein the reaction zone is formed by a reactor block (22) which includes an inlet region for the supply of reaction educts and an outlet region for the discharge of reaction products and is heated up by means of an induction heater (100), **characterized in that** the reactor block is a reactor block (22) of a microstructured tube bundle reactor (21), wherein the reactor block (22) includes a plurality of individual tubes (25) and the flow ducts thereof form reaction chambers (15).

2. The reactor system according to claim 1, **characterized in that** the induction heater (100) includes a generator which is a solid-state generator.

3. The reactor system according to claim 1 or 2, **characterized in that** the reactor block (22) consists of a refractory metal or its surfaces are coated with a layer of a refractory metal.

4. The reactor system according to any of the preceding claims, **characterized in that** the walls of the reaction chambers (15) are coated with a ceramic layer.

5. The reactor system according to claim 4, **characterized in that** the ceramic layer is formed by passing a coating gas through the reaction chambers (15).

6. The reactor system according to any of the preceding claims, **characterized in that** the walls of the reaction chambers (15) are coated with a catalyst.

7. The reactor system according to any of the preceding claims, **characterized in that** the reactor block (22) includes a cylindrical shell surface (31) and that the tubes (25) substantially extend axially and are arranged parallel to each other.

8. The reactor system according to any of the preceding claims, **characterized in that** the microstructured reactor includes at least one mixing zone for mixing reaction educts of the chemical reaction.

9. The reactor system according to any of the preceding claims, **characterized in that** the microstructured reactor includes a microstructured heat exchanger (24) which serves for the fast cooling of reaction products of the chemical reaction leaving the reactor block (22).

10. The reactor system according to any of the preceding claims, **characterized in that** the microstructured reactor includes a heat exchanger (23) before the reaction zone.

11. The reactor system according to any of claims 9 or 10, **characterized in that** the tubes (25) pass through the reaction zone and the heat exchanger (23, 24).

12. The reactor system according to claim 11, **characterized in that** the route within the tubes (25) in the heat exchanger (23) constitutes a preheating route for the reaction educts.

13. A method for carrying out a chemical reaction in a microstructured reactor including a reaction zone, comprising:

> a. heating up the reaction zone by the induction heater
> b. supplying reaction educts to the reaction zone, and
> c. discharging reaction products formed from the reaction zone,

**characterized in that** the chemical reaction is carried out in a microstructured tube bundle reactor (21) according to any of claims 1 to 12.

14. The method according to claim 13, **characterized in that** the reaction products are quenched in a cooling zone directly subsequent to the reaction zone.

15. The method according to claim 14, **characterized in that** the mixture of the reactants is transported through the reaction zone and from there to a cooling zone directly subsequent to the reaction zone with such a high linear velocity that the time of passing through the reaction zone up to the cooling zone is less than 10 ms.

**Revendications**

1. Système réacteur comprenant un réacteur microstructuré présentant une zone de réaction pour l'exécution d'une réaction chimique, ladite zone de réaction étant formée par un bloc réacteur (22) qui comprend une zone d'entrée pour l'admission de produits de départ de réaction et une zone de sortie de pour l'évacuation de produits de réaction, et étant chauffé au moyen d'un chauffage à induction (100), **caractérisé en ce que** le bloc réacteur est un bloc réacteur (22) d'un réacteur à faisceau tubulaire (21) microstructuré, ledit bloc réacteur (22) comprenant une pluralité de tubes individuels (25) dont les canaux d'écoulement forment des chambres de réaction (15).

2. Système réacteur selon la revendication 1, **caractérisé en ce que** le chauffage à induction (100) comprend un générateur qui est un générateur à l'état solide.

3. Système réacteur selon la revendication 1 ou 2, **caractérisé en ce que** le bloc réacteur (22) est en un métal réfractaire, ou **en ce que** ses surfaces sont revêtues d'une couche en métal réfractaire.

4. Système réacteur selon l'une des revendications précédentes, **caractérisé en ce que** les parois des chambres de réaction (15) sont revêtues d'une couche céramique.

5. Système réacteur selon la revendication 4, **caractérisé en ce que** la couche céramique est formée en faisant traverser un gaz de revêtement à travers les chambres de réaction (15).

6. Système réacteur selon l'une des revendications précédentes, **caractérisé en ce que** les parois des chambres de réaction (15) sont revêtues avec un catalyseur.

7. Système réacteur selon l'une des revendications précédentes, **caractérisé en ce que** le bloc réacteur (22) comporte une surface enveloppe cylindrique (31), et **en ce que** les tubes (25) s'étendent sensiblement axialement et sont agencés parallèlement les uns aux autres.

8. Système réacteur selon l'une des revendications précédentes, **caractérisé en ce que** le réacteur microstructuré comprend au moins une zone de mélange pour le mélange des produits de départ de réaction de la réaction chimique.

9. Système réacteur selon l'une des revendications précédentes, **caractérisé en ce que** le réacteur microstructuré comprend un échangeur de chaleur microstructuré (24) servant au refroidissement rapide des produits de réaction, de la réaction chimique, qui quittent le bloc réacteur (22).

10. Système réacteur selon l'une des revendications précédentes, **caractérisé en ce que** le réacteur microstructuré comprend un échangeur de chaleur (23) avant la zone de réaction.

11. Système réacteur selon l'une des revendications 9 ou 10, **caractérisé en ce que** les tubes (25) traversent la zone de réaction et l'échangeur de chaleur (23, 24).

12. Système réacteur selon la revendication 11, **caractérisé en ce que** le trajet dans les tubes (25) dans l'échangeur de chaleur (23) est réalisé à titre de trajet de préchauffage pour les produits de départ de réaction.

13. Procédé pour l'exécution d'une réaction chimique dans un réacteur microstructuré comprenant une zone de réaction, comprenant :

    a) chauffage de la zone de réaction par le chauffage à induction
    b) l'admission de produits de départ de réaction vers la zone de réaction, et
    c) évacuation des produits de réaction apparus hors de la zone de réaction,

**caractérisé en ce que** la réaction chimique est exécutée dans un réacteur à faisceau de tubes microstructuré (21) selon l'une des revendications 1 à 12.

14. Procédé selon la revendication 13, **caractérisé en ce que** les produits de réaction sont refroidis brutalement dans une zone de refroidissement qui suit directement la zone de réaction.

15. Procédé selon la revendication 14, **caractérisé en ce que** le mélange des produits réactifs est transporté à travers la zone de réaction et de celle-ci vers une zone de refroidissement qui suit directement la zone de réaction avec une vitesse linéaire aussi élevée que la durée de traversée à travers la zone de réaction jusqu'à la zone de refroidissement est inférieure à 10 ms.

Fig. 1a

Fig. 16

Fig. 1c

Fig. 1d

Fig. 1e

Fig. 1f

EP 1 945 345 B1

Fig. 2a

Fig. 26

Fig.3a

TYP A

Fig. 3b

TYP B

Fig. 3c

45

47

46c

46d

50

43

51

46b

46a

45

43

51 46c

50

46b

Fig.3d

Fig.4a

Fig. 46

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19708472 A1
- DE 10251658 A
- US 2002170976 A1

**In der Beschreibung aufgeführte Nicht-Patentliteratur**

- *Angew. Chem. Int. Ed.,* 2004, vol. 43, 406-446
- **A.RENKEN.** *Springer Series in Chemical Physics,* 2004, vol. 75, 523-542
- **M.FREEMANTLE.** *Chemical Engineering Journal,* 2004, vol. 98, 1-38
- **V.HESSEL ; H.LÖWE ; A.MÜLLER ; G.KOLB.** Chemical Micro Process Engineering - Processing and Plants. Wiley-VCH, 2005
- **V.HESSEL ; S.HARDT ; H.LÖWE.** Chemical Micro Process Engineering - Fundamentals Modelling and Reactions. Wiley-VCH, 2004
- **W.EHRFELD ; V.HESSEL ; H.LÖWE.** Microreactors. Wiley-VCH, 2000
- *Demis-Reaktor: Chemical and Engineering News,* vol. 82 (41), 39-43
- **I.STOJANOVIC.** Sicherer Umgang mit Phosgen. *Chemie Technik,* 1992, vol. 21 (2), 6-68
- **R.S.BENSON ; J.W.PONTON.** *Trans. Ind. Chem. Eng.,* 1993, vol. 71 (A2), 160-168
- **W.EHRFELD ; V.HESSEL ; V.HAVERKAMP.** Microreactors, Ullmann's Encycopedia of Industrial Chemistry. Wiley-VCH, 1999
- Heterogeneously Catalyzed Reactions in a Microreactor. **D.HÖNICKE ; G.WIEßMEIER.** Microsystem Technology for Chemical and Biological Microreactors, DECHEMA Monographie. VCH Verlagsgesellschaft, 1996, vol. 132, 93-107
- **W.EHRFELD ; H.LEHR.** *Radiat. Phys. Chem.,* 1995, vol. 45, 349-365
- **W. EHRFELD et al.** Potentials and Realization of MicroreactorsA. *DECHEMA Monographie,* vol. 132, 1-29
- **J.J.LEROU et al.** Microfabricated Minichemical Systems: Technical Feasibility. *DECHEMA Monographie,* vol. 132, 51-69
- **O.WÖRZ ; K.P.JÄCKEL ; T.RICHTER ; A.WOLF.** Microreactors, a New Efficient Tool for Optimum Reactor Design. *Proc. of 2nd International Conference on Microreaction Technology, Topical Conference Preprints,* 09. Marz 1998, 183-185
- **G.KOLB ; V.HESSEL.** *Chemical Engineering Journal.,* 2004, vol. 98, 1-38
- **V.HESSEL ; W.EHRFELD ; K.GOLBIG ; O.WÖRZ.** Mikroreaktionssystem für die Hochtemperatursynthese. *GIT Labor-Fachzeitschrift,* 1999, 1100-1103
- Ullmann, Encyclopädie der technischen Chemie. 1972, vol. 9, 658-660
- *Kirk Othmer,* vol. 7, 756-761
- **W.EHRFELD et al.** Microreactors. Wiley VCH, 2000, 217-224
- Elektrotechnologie. VEB Verlag Technik, 1983, 58-114
- **G.BENKOWSKI.** Induktionserwärmung. Berlin Verlag Technik, 1990
- **R.E.HAIMBAUGH.** Practical Induction Heat Treating. ASM International Materials Park, Dezember 2001
- **V.RUDNEV ; D.LOVELESS ; R.COOK ; M.BLACK.** Handbook of Induction Heating. Marcel Dekker Inc, 2003
- **MICHAEL P..HAROLD et al.** Process engineering in the evolving chemical industry. *AIChE Journal,* 16. April 2004, vol. 26 (11), 2123-2127, http://www3.interscience.wiley.com/journal/108066776/abstract
- **V.RUDNEV ; D.LOVELESS ; R.COOK ; M.BLACK.** Handbook of Induction Heating. Marcel Dekker, 2003, 555-579
- **G.BENKOWSKI.** Induktionserwärmung. Berlin-Verlag Technik, 1990
- **K.OHMURA et al.** *Proceedings of International Conference on Stainless Steels,* 1991, 1212